(19) Europäisches Patentamt European Patent Office Office européen des brevets

(11) **EP 4 769 931 A1**

(12) **EUROPEAN PATENT APPLICATION**
published in accordance with Art. 153(4) EPC

(43) Date of publication:
**01.07.2026 Bulletin 2026/27**

(21) Application number: **24863011.3**

(22) Date of filing: **19.07.2024**

(51) International Patent Classification (IPC):
*H02P 6/08* [(2016.01)]     *H02P 6/06* [(2006.01)]
*H02P 6/14* [(2016.01)]     *H02P 21/14* [(2016.01)]
*H02P 27/06* [(2006.01)]

(52) Cooperative Patent Classification (CPC):
**H02P 6/06; H02P 6/08; H02P 6/14; H02P 21/14;
H02P 27/06**

(86) International application number:
**PCT/KR2024/010486**

(87) International publication number:
**WO 2025/053429 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.09.2023 KR 20230117632**

(71) Applicants:
• **Samsung Electronics Co., Ltd
Suwon-si, Gyeonggi-do 16677 (KR)**
• **The Industry & Academic Cooperation in
Chungnam National University (IAC)
Daejeon 34134 (KR)**

(72) Inventors:
• **JUNG, Bumun
Suwon-si, Gyeonggi-do 16677 (KR)**

• **LEE, Wookjin
Daejeon 34185 (KR)**
• **PARK, Dahye
Daejeon 34167 (KR)**
• **SON, Minah
Suwon-si, Gyeonggi-do 16677 (KR)**
• **SONG, Yongjun
Daejeon 34889 (KR)**
• **LEE, Yongdae
Suwon-si, Gyeonggi-do 16677 (KR)**
• **LEE, Hakjun
Suwon-si, Gyeonggi-do 16677 (KR)**
• **LIM, Seungmoo
Suwon-si, Gyeonggi-do 16677 (KR)**

(74) Representative: **Walaski, Jan Filip
Venner Shipley LLP
TIDE Bankside
8 Emerson Street
London SE1 9DU (GB)**

(54) **HOME APPLIANCE COMPRISING MOTOR AND HOME APPLIANCE CONTROL METHOD**

(57)     Provided are a home appliance including a motor, and a method for controlling a home appliance including a motor. The method for controlling a home appliance including a motor comprises the steps of: calculating a duty ratio for an inverter control signal for changing on/off states of a plurality of switches included in an inverter at an end time point of a square wave control; calculating a phase voltage of the motor on the basis of the inverter control signal; and on the basis of the phase voltage of the motor and a rotor position of the motor, configuring an initial voltage command for initiating a sinusoidal control, wherein a phase voltage of the motor based on the initial voltage command corresponds to a phase voltage of the motor based on the duty ratio.

FIG. 7

```
              ┌─────────┐
              │  START  │
              └────┬────┘
                   │
┌──────────────────────────────────────────────────┐
│ CALCULATE DUTY RATIO OF INVERTER CONTROL SIGNAL TO │── S710
│ CHANGE ON/OFF STATE OF MULTIPLE SWITCHES INCLUDED IN│
│ INVERTER AT TIME OF TERMINATING SQUARE WAVE CONTROL │
└──────────────────────┬─────────────────────────────┘
                       │
          ┌────────────────────────────────┐
          │ CALCULATE PHASE VOLTAGE OF MOTOR │── S720
          │ BASED ON INVERTER CONTROL SIGNAL │
          └────────────────┬───────────────┘
                           │
      ┌────────────────────────────────────────┐
      │ SET INITIAL VOLTAGE COMMAND TO INITIATE   │── S730
      │ SINUSOIDAL WAVE CONTROL BY PERFORMING     │
      │ COORDINATE TRANSFORMATION ON PHASE        │
      │ VOLTAGE OF MOTOR                          │
      └────────────────────┬──────────────────────┘
                           │
         ┌──────────────────────────────────┐
         │ INITIATE SINUSOIDAL WAVE CONTROL   │── S740
         │ BASED ON INITIAL VOLTAGE COMMAND   │
         └────────────────┬─────────────────┘
                          │
                     ┌─────────┐
                     │   END   │
                     └─────────┘
```

EP 4 769 931 A1

**Description**

**Technical Field**

Embodiments of the present disclosure relate to a home appliance including a motor and a method of controlling the home appliance.

**Background Art**

Home appliances such as cleaners, refrigerators, air conditioners, etc., may include a motor for driving a compressor. The home appliance may use, for example, a 3-phase brushless permanent magnet synchronous motor, i.e., a brushless direct current (DC) (BLDC) motor.

Such a motor may be driven in various conduction modes, for example, a sinusoidal wave conduction mode or a square wave conduction mode. In general, the home appliance controls the motor by configuring hardware or software designed for one of the conduction modes. The sinusoidal wave conduction mode may have an increasing inverter switching loss because voltages are applied to all the 3-phases of the motor, but may have improved motor efficiency because phase currents applied to the motor have the form of sinusoidal waves approximate to a basic frequency. The square wave conduction mode may have reduced inverter switching loss as compared to the sinusoidal wave conduction mode because voltages are applied only to two of the 3-phases of the motor. However, in the square wave conduction mode, as the phase current applied to the motor has the form of sinusoidal waves, harmonic frequencies increase, deteriorating the motor efficiency.

**Disclosure of Invention**

**Solution to Problem**

According to an embodiment of the present disclosure, a method of controlling a home appliance including a motor includes calculating a duty ratio of an inverter control signal to change on/off states of a plurality of switches included in an inverter at a time of terminating square wave control, calculating a phase voltage of the motor based on the inverter control signal, and setting an initial voltage command to initiate sinusoidal wave control based on the phase voltage of the motor and a position of a rotor of the motor, wherein a phase voltage of the motor based on the initial voltage command is characterized to correspond to the phase voltage of the motor based on the duty ratio.

According to an embodiment of the present disclosure, the method of controlling the home appliance including the motor further includes detecting a phase current to the motor through a current sensor at a time of terminating the sinusoidal wave control, calculating a d-axis voltage and a q-axis voltage of the motor based on the phase current to the motor, and setting an initial duty ratio command to initiate the square wave control based on the d-axis voltage and q-axis voltage of the motor, wherein a phase voltage of the motor based on the initial duty ratio command is characterized to correspond to the phase voltage of the motor based on the sinusoidal wave control.

According to an embodiment of the present disclosure, a method of controlling a home appliance including a motor includes setting an initial voltage command to initiate sinusoidal wave control by calculating a duty ratio of an inverter control signal to be applied to the inverter at a time of terminating square wave control, and setting an initial duty ratio command to initiate square wave control by detecting a phase current to the motor at a time of terminating sinusoidal wave control, wherein a phase voltage applied to the motor at a time of initiating the sinusoidal wave control is characterized to be equal to the phase voltage applied to the motor at the time of terminating the square wave control, and wherein a phase voltage applied to the motor at a time of initiating the square wave control is characterized to be equal to the phase voltage applied to the motor at the time of terminating the sine wave control.

According to an embodiment of the present disclosure, a home appliance including a motor includes a motor, an inverter generating an alternate current (AC) current from direct current (DC) power and outputting an AC driving current to the motor, a current sensor detecting a phase current to the motor, a voltage sensor detecting a phase voltage of the motor, a memory storing at least one instruction, and at least one processor. The at least one processor is configured to execute the at least one instruction to calculate a duty ratio of an inverter control signal to change on/off states of a plurality of switches included in the inverter at a time of terminating square wave control. The at least one processor is configured to calculate a phase voltage of the motor based on the inverter control signal. The at least one processor is configured to set an initial voltage command to initiate sinusoidal wave control based on the phase voltage of the motor and a position of a rotor of the motor. A phase voltage of the motor based on the initial voltage command is characterized to correspond to the phase voltage of the motor based on the duty ratio.

## Brief Description of Drawings

FIG. 1 illustrates an operation of a home appliance including a motor, according to an embodiment of the present disclosure.

FIG. 2 is a block diagram illustrating a configuration of a sinusoidal wave controller, according to an embodiment of the present disclosure.

FIG. 3 is a block diagram illustrating a configuration of a square wave controller, according to an embodiment of the present disclosure.

FIG. 4 is a graph representing a phase current to the motor controlled in a sinusoidal wave conduction mode and pulse width modulation (PWM) signals, according to an embodiment of the present disclosure.

FIG. 5 is a graph representing a phase current to the motor controlled in a square wave conduction mode and PWM signals, according to an embodiment of the present disclosure.

FIG. 6 is a block diagram for describing an operation of a home appliance for switching a conduction mode according to a speed command, according to an embodiment of the present disclosure.

FIG. 7 is a flowchart for describing a method of switching a square wave conduction mode to a sinusoidal wave conduction mode, according to an embodiment of the present disclosure.

FIG. 8 is a flowchart for describing a method of switching a sinusoidal wave conduction mode to a square wave conduction mode, according to an embodiment of the present disclosure.

FIG. 9 illustrates an operation of a home appliance including a motor, according to an embodiment of the present disclosure.

FIG. 10 is a block diagram for describing an operation of a home appliance for switching a conduction mode according to a speed command and a battery voltage, according to an embodiment of the present disclosure.

FIG. 11 is a graph for describing a time to switch a conduction mode according to a speed command and a battery voltage, according to an embodiment of the present disclosure.

FIG. 12 is a graph of phase currents to the motor resulting from switching a square conduction mode to a sinusoidal wave conduction mode, according to an embodiment of the present disclosure.

FIG. 13 is a graph of phase currents to the motor resulting from switching a sinusoidal wave conduction mode to a square wave conduction mode, according to an embodiment of the present disclosure.

FIG. 14 is an example of a circuit diagram of a home appliance including a motor, according to an embodiment of the present disclosure.

FIG. 15 is a detailed block diagram of a home appliance, according to an embodiment of the present disclosure.

FIG. 16 is a flowchart illustrating an operation of a home appliance, according to an embodiment of the present disclosure.

## Mode for the Invention

Terms as used herein will be described before detailed descriptions of embodiments of the present disclosure are provided.

The terms are selected as common terms that are currently widely used, taking into account principles of the disclosure, which may however depend on intentions of those of ordinary skill in the art, judicial precedents, emergence of new technologies, and the like. Some terms as used herein are selected at the applicant's discretion, in which case, the terms will be explained later in detail in connection with embodiments of the present disclosure. Therefore, the terms should be defined based on their meanings and descriptions throughout the disclosure.

Throughout the present disclosure, the expression "at least one of a, b or c" indicates only a, only b, only c, both a and b, both a and c, both b and c, all of a, b, and c, or variations thereof.

The term "include (or including)" or "comprise (or comprising)" is inclusive or openended and does not exclude additional, unrecited elements or method steps. The terms "unit", "module", "block", etc., as used herein each represent a unit for handling at least one function or operation, and may be implemented in hardware, software, or a combination thereof.

An embodiment of the present disclosure will now be described in detail with reference to accompanying drawings so as to be readily practiced by those of ordinary skill in the art. However, an embodiment of the disclosure may be implemented in many different forms, and is not limited to that discussed herein. In the drawings, parts unrelated to the description are omitted for clarity, and like numerals refer to like elements throughout the specification.

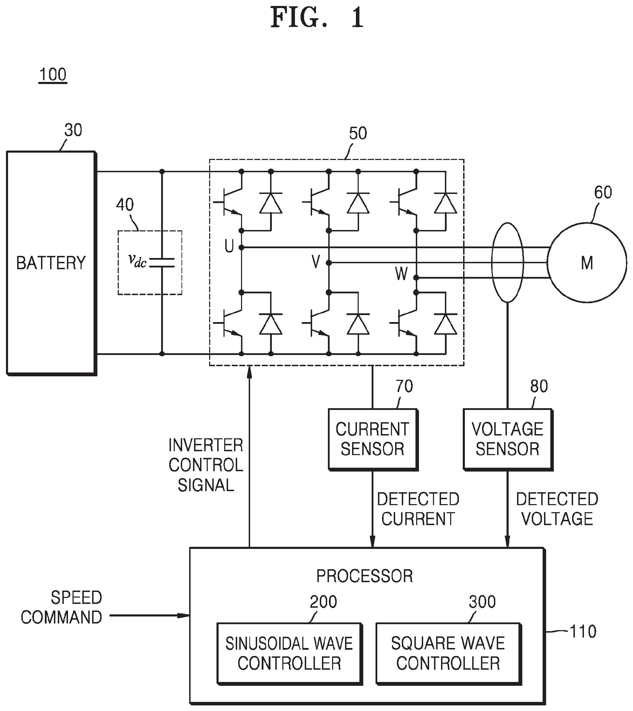

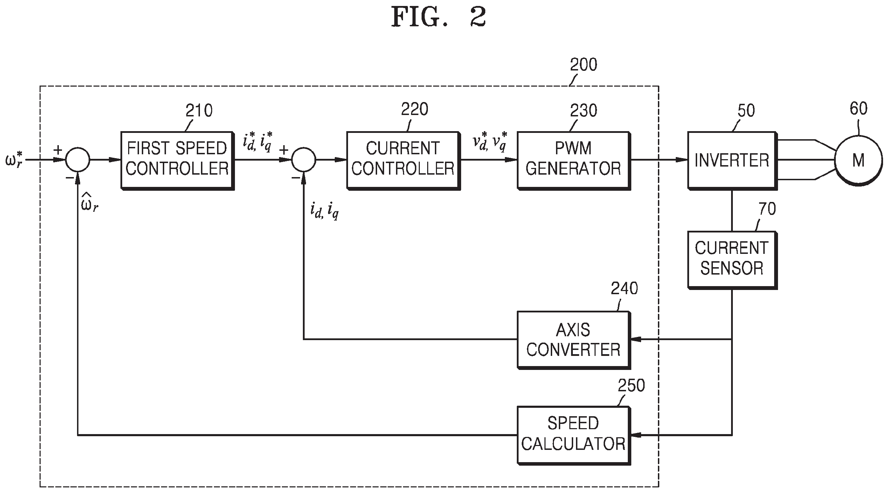

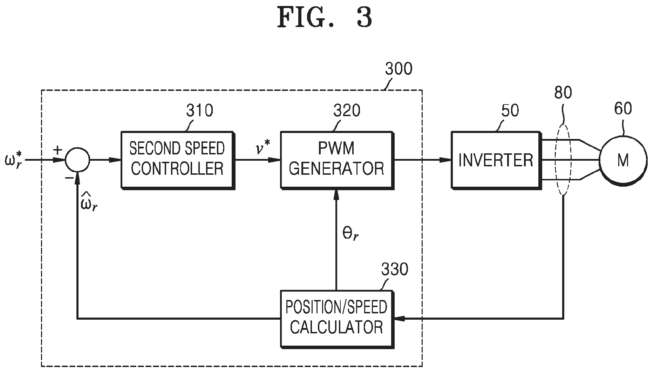

FIG. 1 illustrates an operation of a home appliance including a motor, according to an embodiment of the present disclosure. FIG. 2 is a block diagram illustrating a configuration of a sinusoidal wave controller, according to an embodiment of the present disclosure. FIG. 3 is a block diagram illustrating a configuration of a square wave controller, according to an embodiment of the present disclosure.

Referring to FIG. 1, a home appliance 100 may include a battery 30, a DC link capacitor 40, an inverter 50, a motor 60, a current sensor 70, a voltage sensor 80 and a processor 110.

The home appliance 100 may be implemented in the form of, for example, a cleaner, a refrigerator, an air conditioner, a washing machine, a dryer, a dehumidifier, a garment care device, a shoes care device, a cooking device, etc. The home appliance 100 may control the motor 60 for an operation such as power control, output control, etc. The motor 60 may supply driving force to drive a compressor (not shown).

The motor 60 outputs the driving force to a certain home appliance function module in the home appliance 100. The motor 60 may be any motor including a stator wound by a coil and a rotor that rotates according to a magnetic field produced from the coil. The motor 60 may receive an alternating current (AC) driving current from the inverter 50 to generate certain torque. The motor 60 may correspond to a 3-phase brushless permanent magnet synchronous motor. The motor 60 may be implemented in a form in which the stator has three phases, e.g., U phase, V phase and W phase.

The inverter 50 is a power conversion device having a plurality of switching devices and a plurality of diodes, converting direct current (DC) power to AC power. The inverter 50 may be connected to the DC link capacitor 40 at one end and to the motor 60 at the other end. The inverter 50 receives an input of DC power, generates an AC driving current by switching operations, and outputs the driving current to the motor 60. For example, the inverter 50 may drive the motor 60 by converting the DC power into an AC voltage pulsed at any variable frequency in a pulse width modulation (PWM) method. The inverter 50 may include a switching device pair (an upper switch and a lower switch) corresponding to each phase of the 3-phase motor. The inverter 50 may generate and output a driving current to each phase of the motor 60 by opening and closing the switching devices according to an inverter control signal received from the processor 110.

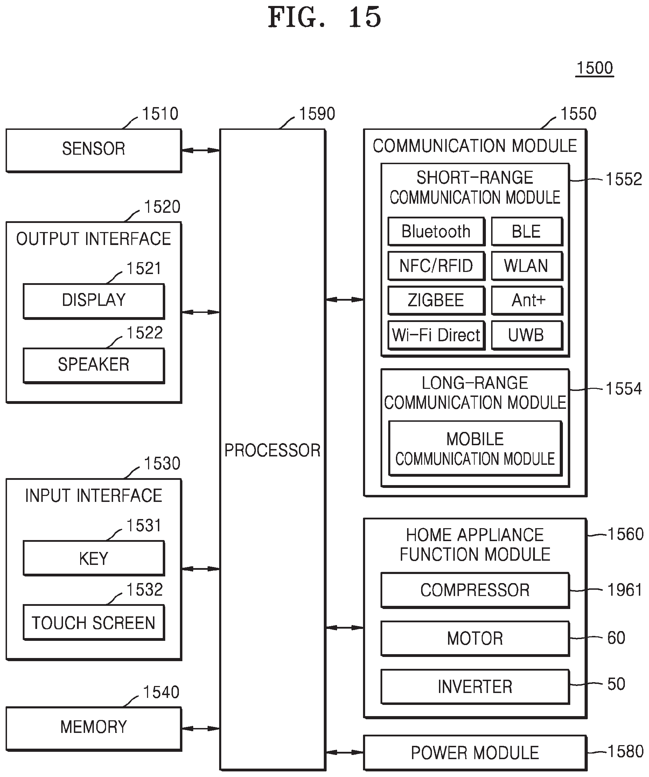

The battery 30 may correspond to a power module (1580 of FIG. 15) of the home appliance 100. The power module receives power from an external power source, converts the power to rated voltage and current and applies the driving current to each component.

In an embodiment of the present disclosure, modes in which the home appliance 100 controls rotation speed of the motor 60 may include a square wave conduction mode and a sinusoidal wave conduction mode. The processor 110 may include a square wave controller 300 for controlling the motor 60 in the square wave conduction mode and a sinusoidal wave controller 200 for controlling the motor 60 in the sinusoidal wave conduction mode.

The square wave conduction mode is a mode of alternately applying high (H), low (L) and open voltages to each of the 3-phase coils. In the square wave conduction mode, only two of the 3-phase coils of the motor 60 are conducting current, and counter electromotive force (EMF) may be generated in the remaining open 1-phase coil through a change in magnetic field produced when the rotor is rotated. The counter EMF may be detected through the voltage sensor 80. The home appliance 100 may control the rotation speed of the motor 60 by rotating the rotor of the motor 60 through the counter EMF generated in the open 1-phase coil. Furthermore, the home appliance 100 may detect a position of the rotor by detecting a zero-crossing point (ZCP) where the counter EMF of the open 1-phase coil passes zero. Accordingly, the home appliance 100 may conduct each phase after 30 degrees of phase angle from the detected position of the rotor, and thus, know of a phase switching sequence. The phase switching sequence refers to an opening and closing sequence of a plurality of switching devices of the inverter. The phase switching sequence may be determined based on a switching sequence of the inverter control signal. The square wave conduction mode is what is called a 120-degree conduction mode.

The sinusoidal wave conduction mode is a method of conducting currents to the three phase coils. The home appliance 100 may detect phase currents applied to the three phase coils through the current sensor 70. As the phase current to the motor 60 is used to rotate the rotor of the motor 60, the home appliance 100 may determine rotation speed of the motor 60 through the phase current to the motor 60. The home appliance 100 may control the rotation speed of the motor 60 by applying the inverter control signal to the inverter 50. The sinusoidal wave conduction mode is what is called a 180-degree conduction mode. The sinusoidal wave conduction mode may include space vector width modulation (SVPWM), discrete PWM (DPWM), etc.

In an embodiment of the present disclosure, the home appliance 100 may switch the sinusoidal wave conduction mode to the square wave conduction mode or switch the square wave conduction mode to the sinusoidal wave conduction mode. In an embodiment, the home appliance 100 may select a proper control mode from among the sinusoidal wave conduction mode or the square wave conduction mode based on the speed command to efficiently control the motor 60. For example, the home appliance 100 may use the square wave conduction mode to minimize switching loss in a region where the home appliance 100 operates at low speed. For example, the home appliance 100 may use the sinusoidal wave conduction mode to maximize efficiency of the motor 60 in a region where the home appliance 100 operates at high speed.

Furthermore, in an embodiment of the present disclosure, the home appliance 100 may select a proper control mode from among the sinusoidal wave conduction mode or the square wave conduction mode based on a battery voltage. For example, the home appliance 100 may use the square wave conduction mode to reduce switching loss as the battery voltage decreases. For example, the home appliance 100 may use the sinusoidal wave conduction mode as the battery voltage of the home appliance 100 increases.

In an embodiment of the present disclosure, in case of switching the conduction mode, the home appliance 100 may perform smooth switching, what is called seamless transition, to prevent excessive changes in phase current to the motor 60. In an embodiment of the present disclosure, the home appliance 100 may control a phase voltage applied to the motor 60 right before the conduction mode is switched to be equal to a phase voltage applied to the motor 60 in a switched conduction mode. For example, the home appliance 100 may use a certain voltage formula so that the phase voltage applied to the motor 60 at a time of initiating the switched conduction mode is equal to the phase voltage applied to the motor 60 at a time of terminating the previous conduction mode. The home appliance 100 may maintain the phase voltage of the motor 60 right before the switching of the conduction mode to be equal to the phase voltage of the motor 60 right after the switching by using the certain voltage formula.

Accordingly, the home appliance 100 may drive the motor 60 more efficiently because it is able to switch the conduction mode immediately at a desired time. Overcurrent issues caused by drastic changes in phase voltage of the motor 60 due to the switching of the conduction mode may also be prevented.

The sinusoidal wave conduction mode and the square wave conduction mode will now be further described with reference to FIGS. 1 to 5.

Referring to FIGS. 1 and 2, the processor 110 may include a sinusoidal wave controller 200 for controlling the inverter 50 in the sinusoidal wave conduction mode.

The current sensor 70 may detect a phase current to the motor 60. The current sensor 70 may deliver the detected phase current to the processor 110. The processor 110 may determine rotation speed of the motor 60 based on the detected phase current. The current detected by the current sensor 70 may correspond to the phase current applied to the motor 60 from the inverter 50. In an embodiment, the current sensor 70 may be located between an anode of the DC link capacitor 40 and the inverter 50. Alternatively, in an embodiment, the current sensor 70 may be located between the inverter 50 and the motor 60. Alternatively, in an embodiment, the current sensor 70 may be connected in series to a lower switch of the inverter 50. The current sensor 70 may include a shunt resistor, a current detection sensor, etc.

The sinusoidal wave controller 200 may control the inverter 50 in the sinusoidal wave conduction mode. The sinusoidal wave controller 200 may receive the detected phase current to the motor 60 from the current sensor 70. As the phase current to the motor 60 is used to rotate the rotor of the motor 60, the sinusoidal wave controller 200 may estimate the rotation speed of the motor 60 through the phase current to the motor 60 received from the current sensor 70. The sinusoidal wave controller 200 may include a first speed controller 210, a current controller 220, a PWM generator 230, an axis converter 240 and a speed calculator 250.

The first speed controller 210 may receive a speed command and rotor speed, and calculate and output a current command (torque command) to reduce the speed error. The first speed controller 210 may include a comparator for comparing a speed command ($\omega^*_r$) desired by the user with rotor speed ($\omega_r$) and a speed proportional integral controller (PI). The first speed controller 210 receives the speed command ($\omega^*_r$) and the rotor speed ($\omega_r$), and generates and outputs a q-axis current command ($i^*_q$) to the current controller 220 by proportionally integrating the speed error.

The current controller 220 may receive a current command and a driving current and calculate and output a voltage command to reduce the current error. The current controller 220 receives the q-axis current command ($i^*_q$) and a d-axis current command ($i^*_d$) generated by the first speed controller 210, and generates and outputs a voltage command. The current controller 220 outputs a q-axis voltage command ($V^*_q$) to the PWM generator 230 by passing the q-axis current command ($i^*_q$) through a current PI controller and a filter. For example, the current controller 220 compares the q-axis current command ($i^*_q$) with a q-axis detected current ($i_q$) resulting from axis transformation of a motor phase current through the axis converter 240, and outputs the q-axis voltage command ($V^*_q$) to the PWM generator 230 by passing the difference, i.e., a current error, through the current PI controller and the filter. The current controller 220 outputs a d-axis voltage command ($V^*_d$) to the PWM generator 230 by passing the d-axis current command through another current PI controller and filter. For example, the current controller 220 compares the d-axis current command ($i^*_d$) with a d-axis detected current ($i_d$) resulting from axis transformation of a motor phase current, and outputs the d-axis voltage command ($V^*_d$) to the PWM generator 230 by passing the difference, i.e., a current error, through the current PI controller and the filter. The d-q axis voltages and the d-q axis currents are values in a synchronous coordinate system (d, q).

The PWM generator 230 may generate an inverter control signal to control the switching devices of the inverter 50 in the form of a PWM signal (pulse width modulation signal) based on the voltage command. The PWM generator 230 may generate the inverter control signal by vector control. The PWM generator 230 performs axis transformation on a voltage command in the synchronous coordinate system (d, q) to a voltage command in the static coordinate system ($\alpha$, $\beta$). For example, the PWM generator 230 converts ($V^*_d$, $V^*_q$) to ($V^*_\alpha$, $V^*_\beta$). Furthermore, the PWM generator 230 converts the voltage command in the stationary coordinate system ($\alpha$, $\beta$) to fit into the form of the motor to be driven and outputs the conversion result. For example, the PWM generator 230 converts the voltage commands ($V^*_\alpha$, $V^*_\beta$) in the stationary coordinate system to 3-phase voltage commands ($V^*_u$, $V^*_v$, $V^*_w$) and outputs the results to the inverter 50. 3-Phase voltages for the motor 60 may be determined according to the q-axis voltage command ($V^*_q$) and the d-axis voltage command ($V^*_d$) received from the current controller 220.

The axis converter 240 may perform coordinate transformation on the 3-phase currents detected through the current sensor 70 into two axes: direct axis (d-axis) and quadra axis (q-axis). The axis converter 240 may obtain a d-axis detected current ($i_d$) and a q-axis detected current ($i_q$) and output them to the current controller 220. The d-axis represents a direction of the rotor's magnetic field, and the q-axis represents a direction perpendicular to the magnetic field.

The speed calculator 250 may calculate and output rotor speed ($\omega_r$) to the first speed controller 210. The first speed controller 210 may compare the rotor speed ($\omega_r$) received from the speed calculator 250 with the speed command ($\omega^*_r$), and generate the d-axis current command ($i^*_d$) and the q-axis current command ($i^*_q$).

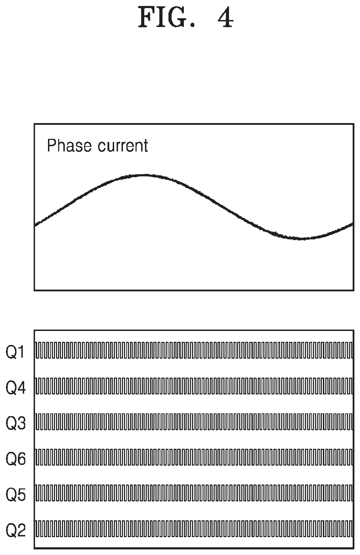

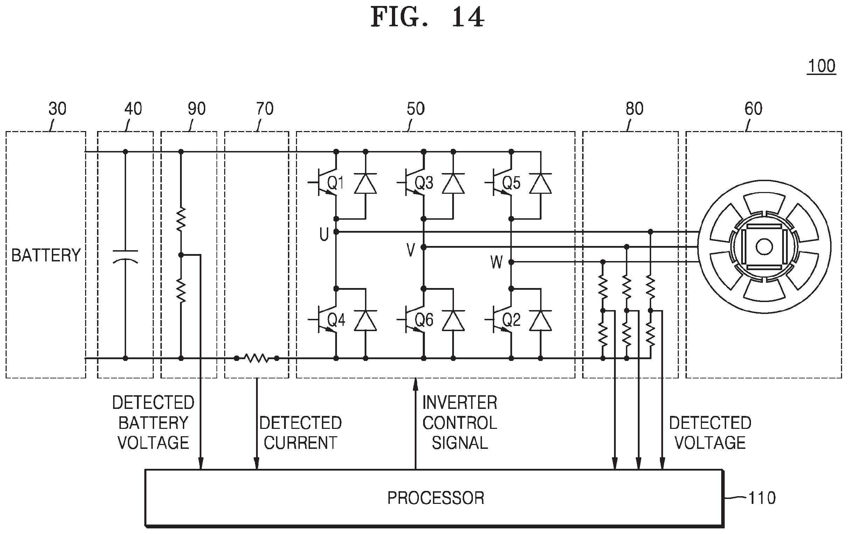

FIG. 4 is a graph representing a phase current to the motor controlled in a sinusoidal wave conduction mode and PWM signals, according to an embodiment of the present disclosure. Referring to FIG. 4, the processor 110 detects a driving current and generates an inverter control signal, and outputs the signal to U, V and W phase gates of the 3-phase motor through the inverter 50. Switching devices Q1 to Q6 of the inverter 50 are illustrated in FIG. 14. In this case, a graph of the phase current has the form of sinusoidal waves. Only 1-phase current is illustrated as the phase current, but the three phases may be conducting at 120-degree intervals.

Referring to FIGS. 1 and 3, the processor 110 may include the square wave controller 300 for controlling the inverter 50 in the square wave conduction mode.

The voltage sensor 80 may detect a driving voltage applied to the motor 60 from the inverter 50. The voltage sensor 80 may deliver the detected driving current to the processor 110. Furthermore, the voltage sensor 80 may detect back electromotive force (back EMF) output to a coil according to rotation of the rotor of the motor 60. The back EMF is EMF induced in the winding of the motor 60 as the rotor of the motor 60 rotates. The detected back EMF may be used to detect a position of the rotor of the motor 60 in the square wave control. For example, the voltage sensor 80 may detect a zero-crossing point (ZCP), a point at which the back EMF passes '0'.

The square wave controller 300 may control the inverter 50 in the square wave conduction mode. The square wave controller 300 may receive the detected driving voltage from the voltage sensor 80. The square wave controller 300 may estimate rotation speed and a position of the rotor of the motor 60 through the driving voltage detected from the voltage sensor 80. A duty ratio of the PWM signal may be determined according to the rotation speed of the motor 60. A switching sequence may be determined according to the position of the rotor of the motor 60. The square wave controller 300 may include a second speed controller 310, a PWM generator 320 and a position/speed calculator 330.

The second speed controller 310 may receive a speed command and rotor speed, and output a duty ratio of an inverter control signal to reduce the speed error. For example, the second speed controller 310 generates a duty ratio command (v*) of the inverter control signal to reduce the speed error by comparing a speed command ($\omega^*_r$) desired by the user with the rotor speed ($\omega_r$), and outputs the duty ratio command to the PWM generator 320. The rotor speed may be received from the position/speed calculator 330. 3-phase voltages of the motor 60 may be determined according to the duty ratio command (v*) output by the second speed controller 310.

The PWM generator 320 may generate the inverter control signal according to the duty ratio based on the duty ratio command. The PWM generator 320 may deliver the inverter control signal according to the duty ratio to the inverter 50. A phase voltage of the motor 60 may be determined based on the duty ratio of the inverter control signal. The PWM generator 320 may determine a switching sequence to turn on/off the inverter 50 based on the rotor position ($\theta_r$). According to the switching sequence output by the PWM generator 320, high phase, low phase and open phase of the three phases of the motor 60 may be determined.

The position/speed calculator 330 may receive the detected driving voltage from the voltage sensor 80. The position/speed calculator 330 may calculate rotor speed ($\omega_r$) based on the driving voltage and output the rotor speed to the second speed controller 310. Furthermore, the position/speed calculator 330 may detect a rotor position ($\theta_r$) of the motor 60 based on the driving voltage. The position/speed calculator 330 may output the rotor position ($\theta_r$) to the PWM generator 320.

In the meantime, the PWM generator 320 of the square wave controller 300 may be the same circuit as or a different circuit from the PWM generator 230 of the sinusoidal wave controller 200.

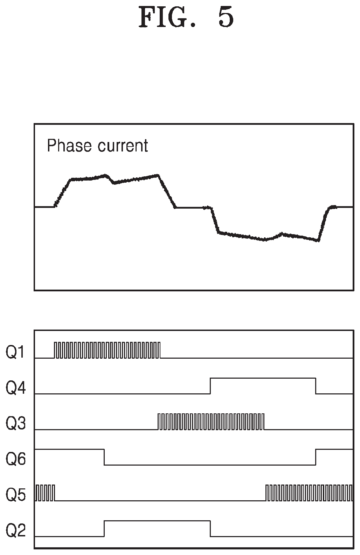

FIG. 5 is a graph representing a phase current to the motor controlled in a square wave conduction mode and PWM signals, according to an embodiment of the present disclosure. Referring to FIG. 5, the processor 110 may detect a driving voltage and generate an inverter control signal according to a duty ratio. Unlike in FIG. 4, the phase current has a square waveform. Furthermore, for example, in a sequence, an inverter control signal of a PWM form may be applied to the first switching device Q1, and an inverter control signal in an ON state may be applied to the sixth switching device Q6. In this case, the U and V phases may be conducting current, and the W phase may be opened.

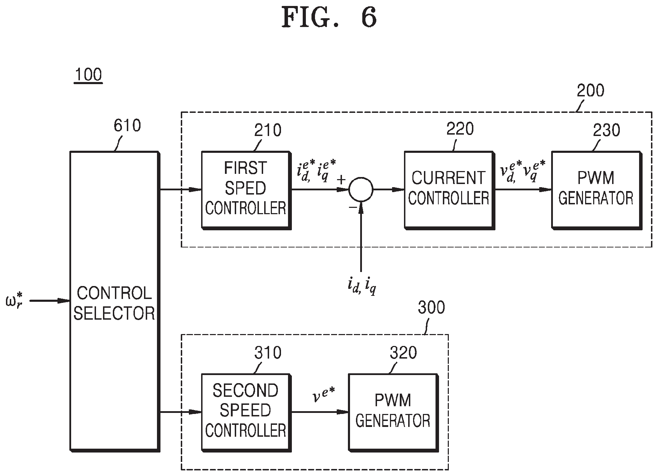

FIG. 6 is a block diagram for describing an operation of a home appliance for switching a conduction mode according to a speed command, according to an embodiment of the present disclosure.

In an embodiment of the present disclosure, the home appliance 100 may switch the sinusoidal wave conduction mode to the square wave conduction mode or switch the square wave conduction mode to the sinusoidal wave conduction mode. For example, in a region where the home appliance 100 operates at low speed, the processor 110 may use the square wave conduction mode to minimize the switching loss. For example, the home appliance 100 may use the sinusoidal wave conduction mode to maximize efficiency of the motor 60 in a region where the home appliance 100 operates at high speed.

The home appliance 100 may switch the conduction mode according to a speed command set by the user. For example, when the speed command is equal to or higher than a threshold speed, the home appliance 100 may switch the square wave conduction mode to the sinusoidal wave conduction mode. For example, when the speed command is less than the threshold speed, the home appliance 100 may switch the sinusoidal wave conduction mode to the square wave conduction mode.

In an embodiment of the present disclosure, the processor 110 may include a control selector 610 to select a control mode according to the speed command. The control selector 610 may select the sinusoidal wave controller 200 or the square wave controller 300 according to the speed command ($\omega_r^*$). The control selector 610 may provide an enable signal to a controller of the selected conduction mode and a disable signal to a controller of the non-selected conduction mode. For example, when the speed command ($\omega_r^*$) is lower than the threshold speed, the control selector 610 may provide the enable signal to the square wave controller 300 and the disable signal to the sinusoidal wave controller 200. For example, when the speed command ($\omega_r^*$) is equal to or higher than the threshold speed, the control selector 610 may provide the enable signal to the sinusoidal wave controller 200 and the disable signal to the square wave controller 300.

In an embodiment of the present disclosure, in case of switching the conduction mode, the home appliance 100 may perform smooth switching to prevent a drastic change in phase current to the motor 60. In an embodiment of the present disclosure, the home appliance 100 may make the phase voltage applied to the motor 60 at a time of terminating the first conduction mode correspond to the phase voltage applied to the motor 60 at a time of initiating the second conduction mode. When the first conduction mode is the sinusoidal wave conduction mode, the second conduction mode may be th square wave conduction mode, and when the first conduction mode is the square wave conduction mode, the second conduction mode may be the sinusoidal wave conduction mode.

In an embodiment of the present disclosure, the home appliance 100 may set an initial command value of the second conduction mode before switching to the second conduction mode from the first conduction mode. The initial command value may be a command value at a time of initiating the second conduction mode to be applied to the PWM generator that generates an inverter control signal. As the second conduction mode is initiated, the inverter control signal generated based on the initial command value may be provided to the inverter 50, and the inverter 50 may apply a driving current to the motor 60 according to the inverter control signal. A phase voltage applied to the motor 60 based on the inverter control signal as the second conduction mode is initiated may be equal to the phase voltage applied to the motor 60 at the time of terminating the first conduction mode.

In an embodiment of the present disclosure, when the first conduction mode is the square wave conduction mode and the second conduction mode is the sinusoidal wave conduction mode, the initial command value may include initial voltage commands ($v_d^{e*}$, $v_q^{e*}$). Furthermore, the initial command value may include initial current commands ($i_d^{e*}$, $i_q^{e*}$).

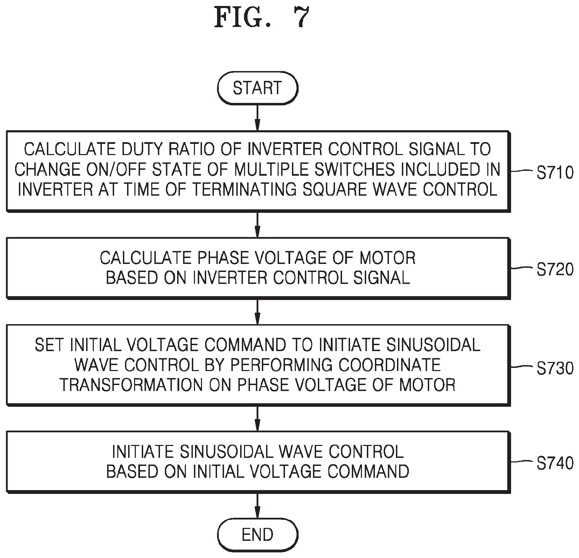

For example, the processor 110 may calculate a duty ratio of the inverter control signal applied to the inverter 50 at a time of terminating the square wave control. The processor 110 may calculate initial voltage commands ($v_d^{e*}$, $v_q^{e*}$) to initiate sinusoidal wave control by calculating a duty ratio of the inverter control signal. Furthermore, the processor 110 may calculate initial current commands ($i_d^{e*}$, $i_q^{e*}$) to initiate sinusoidal wave control based on the initial voltage commands ($v_d^{e*}$, $v_q^{e*}$). The processor 110 may initiate the sinusoidal wave control based on the initial voltage commands ($v_d^{e*}$, $v_q^{e*}$) and the initial current commands ($i_d^{e*}$, $i_q^{e*}$). In an embodiment of the present disclosure, phase voltages applied to the three phases of the motor 60 at the time of initiating the sinusoidal wave control may correspond to phase voltages applied to the three phases of the motor 60 at the time of terminating the square wave control. A method by which the processor 110 switches the square wave conduction mode to the sinusoidal wave conduction mode will now be described in connection with FIGS. 6 and 7.

In an embodiment of the present disclosure, when the first conduction mode is the sinusoidal wave conduction mode and the second conduction mode is the square wave conduction mode, the initial command value may include an initial duty ratio command ($v^{e*}$).

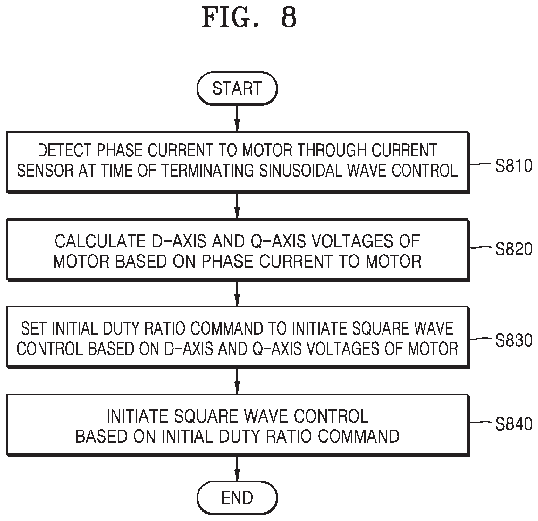

For example, the processor 110 may detect a phase current to the motor 60 at a time of terminating the sinusoidal wave control. The processor 110 may calculate the initial duty ratio command ($v^{e*}$) to initiate the square wave control by detecting th phase current to the motor 60. The processor 110 may initiate the square wave control based on the initial duty ratio command ($v^{e*}$). In an embodiment of the present disclosure, phase voltages applied to the three phases of the motor 60 at the time of initiating the square wave control may correspond to phase voltages applied to the three phases of the motor 60 at the time of terminating the sinusoidal wave control. A method by which the processor 110 switches the sinusoidal wave conduction mode to the square wave conduction mode will now be described in connection with FIGS. 6 and 8.

FIG. 7 is a flowchart for describing a method of switching a square wave conduction mode to a sinusoidal wave conduction mode, according to an embodiment of the present disclosure. FIG. 7 will be described along with FIG. 6.

Referring to FIGS. 6 and 7, in operation S710, the home appliance 100 may calculate a duty ratio of an inverter control signal to change on or off states of the plurality of switches included in the inverter 50 at a time of terminating the square wave control. The time of terminating the square wave control may refer to a time right before switching to the sinusoidal wave control from the square wave control.

The home appliance 100 may apply a current of a square waveform to the motor 60 through the square wave controller 300. The home appliance 100 may detect a driving voltage of the motor 60 through the voltage sensor 80. The voltage sensor 80 may detect and provide the driving voltage of the motor 60 to the processor 110.

The processor 110 may detect rotation speed of the motor 60 based on the driving voltage of the motor 60. For example, the processor 110 may estimate the rotation speed ($\omega_r$) of the motor 60 through the position/speed calculator 330.

The processor 110 may calculate a duty ratio to reduce the speed error between the speed command and the rotation speed of the motor 60 through the second speed controller 310. The processor 110 may generate an inverter control signal based on the duty ratio through the PWM generator 320. The inverter 50 may control the motor 60 by using the driving current of a square waveform according to the square wave control. At a time of terminating the square wave control, the processor 110 may calculate a phase voltage applied to the motor 60.

The processor 110 may detect a position of the rotor of the motor 60 based on the driving voltage of the motor 60. The processor 110 may estimate the position ($\theta_r$) of the rotor of the motor 60 through the position/speed calculator 330. The processor 110 may determine a switching sequence to turn on or off the plurality of switches included in the inverter 50 based on the position ($\theta_r$) of the rotor of the motor 60. The processor 110 may generate an inverter control signal based on the switching sequence through the PWM generator 320. The inverter 50 may supply power to the three phases of the motor 60 by receiving the inverter control signal according to the switching sequence. According to the switching sequence, a high-phase voltage, a low-phase voltage and an open-phase voltage may be applied to the motor 60.

In operation 720, the home appliance 100 may calculate the phase voltage of the motor 60 based on the inverter control signal.

Based on the duty ratio and rotor position, the processor 110 may perform on and off control on the switches of the inverter 50 with a certain duty ratio according to the switching sequence. The processor 110 may calculate a phase voltage of the motor 60 output from the inverter 50 including the turned-on or off switches. For example, the processor 110 may calculate a high-phase voltage, a low-phase voltage and an open-phase voltage of the motor 60.

For example, phase voltages of the motor 60 may be calculated in Equation 1, Equation 2 and Equation 3 as follows:

[Equation 1]

$$V_{PWM} = V_{dc} * (ON\ duty\text{-}0.5)$$

[Equation 2]

$$V_{Low\ ON} = \text{-}0.5 * V_{dc}$$

[Equation 3]

$$V_{Open} = V_{dc} * (ON\ duty\text{-}0.5) + \omega_r * \lambda_{PM} * \sin(\theta_r + \frac{2}{3}\pi)$$

In Equation 1, $V_{PWM}$ refers to a voltage in the first phase of the motor 60 connected to a switch receiving an inverter control signal of a PWM form, $V_{dc}$ refers to DC power, and ON duty refers to a duty ratio. In Equation 2, VLOW ON refers to a voltage in the second phase of the motor 60 connected to a switch receiving an inverter control signal of the ON form. In equation 3, $V_{Open}$ refers to a voltage in the third phase of the motor 60 connected to an open switch. $\omega_r$ refers to rotation speed of the motor 60, $\lambda_{PM}$ refers to an EMF constant, and $\theta_r$ refers to a position of the rotor of the motor 60.

The processor 110 may determine two phases conducting currents and one phase that is open among the three phases of the motor 60 based on the switching sequence determined based on the position of the rotor. The processor 110 may calculate voltages of the first and second phases that are conducting currents and a voltage of the third phase that is open among the three phases of the motor 60 by applying a duty ratio determined based on the rotation speed to Equations 1, 2 and 3.

In operation 730, the home appliance 100 may set an initial voltage command to initiate sinusoidal wave control by performing coordination transformation on the phase voltages of the motor 60.

The processor 110 may convert the three-phase voltages of the motor 60 into voltages in the synchronous coordinate system (d, q) by taking into account an angle of the rotor of the motor 60. For example, the processor 110 may generate two-dimensional components, i.e., d-axis and q-axis voltages ($V_d$, $V_q$), by performing Clarke and Park transformations on the three-phase voltages (Vu, Vv, Vw) through a matrix of Equation 4 as follows:

[Equation 4]

$$f^e_{dqn} = T(\theta) f_{uvw}$$

$$T(\theta) = \frac{2}{3} \begin{bmatrix} \cos\theta & \cos(\theta - \frac{2}{3}\pi) & \cos(\theta + \frac{2}{3}\pi) \\ -\sin\theta & -\sin(\theta - \frac{2}{3}\pi) & -\sin(\theta + \frac{2}{3}\pi) \\ \frac{1}{\sqrt{2}} & \frac{1}{\sqrt{2}} & \frac{1}{\sqrt{2}} \end{bmatrix}$$

In Equation 4, $f^e_{dqn}$ refers to the d-axis and q-axis voltages, e.g., ($V_d$, $V_q$), and $f_{uvw}$ refers to U, V and W-phase voltages, e.g., ($V_u$, $V_v$, $V_w$). n refers to a neutral axis. $\theta$ refers to an angle of the rotor of the motor 60. The U, V and W-phase voltages correspond to the first, second and third phase voltages of the motor 60 calculated in Equation 3.

The processor 110 may set the d-axis and q-axis voltages converted from the three phase voltages of the motor 60 as initial commands to initiate the sinusoidal wave control. For example, the processor 110 may set the d-axis and q-axis voltages to initial voltage commands of the current controller 220. For example, the current controller 220 may set the d-axis voltage to the initial d-axis voltage command ($V_d^{e*}$) of the current controller 220 and the q-axis voltage to the initial q-axis voltage command ($v_q^{e*}$) of the current controller 220 (see FIG. 6).

Furthermore, in an embodiment, the home appliance 100 may set an initial current command to initiate the sinusoidal wave control based on the initial voltage command. The processor 110 may set the d-axis current and q-axis current calculated based on the q-axis voltage and d-axis voltage to the initial current commands of the first speed controller 210.

The processor 110 may calculate an initial d-axis current command ($i_d^{e*}$) and an initial q-axis current command ($i_q^{e*}$) based on the initial d-axis voltage command ($v_d^{e*}$) and the initial q-axis voltage command ($v_q^{e*}$). For example, the initial d-axis current command ($i_d^{e*}$) and an initial q-axis current command ($i_q^{e*}$) may be calculated in Equation 5:

[Equation 5]

$$v^e_d = r_s i^e_d + L_d \frac{di^e_d}{dt} - \omega_e L_q i^e_q$$

$$v^e_q = r_s i^e_q + L_q \frac{di^e_q}{dt} + \omega_e L_d i^e_d + \omega_e \lambda_{PM}$$

In Equation 5, $v^e_d$ refers to the d-axis voltage, $v^e_q$ to the q-axis voltage, $i^e_d$ to the d-axis current, $i^e_q$ to the q-axis current, $L_d$ to d-axis inductance, $L_q$ to q-axis inductance, $r_s$ to resistance of a coil of the motor 60, and $\omega_e$ to angular velocity of the motor 60.

The processor 110 may calculate an initial d-axis current command ($i_d^{e*}$) and an initial q-axis current command ($i_q^{e*}$) by applying the initial d-axis voltage command ($v_d^{e*}$) and the initial q-axis voltage command ($v_q^{e*}$) to Equation 5 (see FIG. 6).

In operation S740, the home appliance 100 may initiate the sinusoidal wave control based on the initial current command and the initial voltage command. The time of initiating the sinusoidal wave control may refer to a time right after switching to the sinusoidal wave control from the square wave control.

The home appliance 100 may switch to the sinusoidal wave control from the square wave control. The home appliance 100 may switch the control mode from the square wave control to the sinusoidal wave control based on the user's speed command or power command. For example, the home appliance 100 may switch to the sinusoidal wave control from the square wave control when the speed command is higher than threshold speed, but is not limited thereto. To switch the control mode from the square wave control to the sinusoidal wave control, the processor 110 may apply a disable signal to the square wave controller 300 and an enable signal to the sinusoidal wave controller 200 through the control selector 610, but is not limited thereto.

The processor 110 may drive the motor 60 in the sinusoidal wave control mode based on the initial current command and the initial voltage command. For example, the processor 110 may initiate the sinusoidal wave control based on the initial d-axis voltage command ($v_d{}^{e*}$), initial q-axis voltage command ($v_q{}^{e*}$), initial d-axis current command ($i_d{}^{e*}$) and initial q-axis current command ($i_q{}^{e*}$). For example, the current controller 220 may provide the initial voltage commands ($v_d{}^{e*}$, $v_q{}^{e*}$) to the PWM generator 230. The PWM generator 230 may generate an inverter control signal to control a switching device of the inverter 50 in a PWM signal form based on the initial voltage commands ($v_d{}^{e''}$, $v_q{}^{e*}$). The inverter 50 may control the motor 60 by using the sinusoidal driving current according to the sinusoidal wave control. Phase voltages may be applied to the motor 60 based on the initial voltage commands.

In an embodiment of the present disclosure, phase voltages applied to the three phases of the motor 60 at the time of initiating the sinusoidal wave control may correspond to phase voltages applied to the three phases of the motor 60 at the time of terminating the square wave control. For example, the phase voltages applied to the motor 60 based on the initial voltage commands may be equal to phase voltages of the motor 60 calculated at the time of terminating the square wave control. For example, the phase voltages applied to the motor 60 based on the initial voltage commands may be equal to phase voltages of the motor 60 calculated by using Equations 1, 2 and 3.

In an embodiment of the present disclosure, the home appliance 100 may calculate initial voltage commands at the time of initiating the sinusoidal wave control based on the duty ratio calculated at the time of terminating the square wave control. The home appliance 100 may prevent overcurrent issues from occurring when switching is performed from the square wave control mode to the sinusoidal wave control mode by switching to the sinusoidal wave control mode after setting the initial voltage command to initiate the sinusoidal wave control. For example, as one of the three phases of the motor 60 is in an open state in the square wave control mode, the phase voltage may be 0 or near 0. When switching to the sinusoidal wave control mode is performed without setting an initial voltage command while 1-phase of the motor 60 is open, an excessive current flows in the open phase of the motor 60, causing overcurrent. In an embodiment of the present disclosure, the home appliance 100 may maintain the voltage in the open phase of the motor 60 before and after the control mode switching by switching to the sinusoidal wave control mode after setting the initial voltage command. Accordingly, the home appliance 100 may switch the conduction mode at a desired time, and perform smooth switching without the overcurrent issue.

FIG. 8 is a flowchart for describing a method of switching from a sinusoidal wave conduction mode to a square wave conduction mode, according to an embodiment of the present disclosure. FIG. 8 will be described along with FIG. 6.

Referring to FIGS. 6 and 8, in operation S810, the home appliance 100 may detect a phase current to the motor 60 through the current sensor 70 at a time of terminating the sinusoidal wave control. The time of terminating the sinusoidal wave control may refer to a time right before switching to the square wave control from the sinusoidal wave control.

The home appliance 100 may apply a sinusoidal current to the motor 60 through the sinusoidal wave controller 300. The home appliance 100 may detect a phase current to the motor 60 through the current sensor 70. The current sensor 70 may detect and provide the phase current to the motor 60 to the processor 110. For example, the current sensor 70 may detect 3-phase currents ($i_u$, $i_v$, $i_w$) to the motor 60.

The processor 110 may detect rotation speed of the motor 60 based on the phase current to the motor 60. For example, the processor 110 may estimate the rotation speed ($\omega_r$) of the motor 60 through the speed calculator 250.

The processor 110 may detect a current command to reduce the speed error between the speed command and the rotation speed of the motor 60 through the first speed controller 210. The processor 110 may receive the current command and a driving current through the current controller 220 and calculate a voltage command to reduce the current error. The processor 110 may generate an inverter control signal based on the voltage command through the PWM generator 230. The inverter 50 may control the motor 60 by using the sinusoidal driving current according to the sinusoidal wave control. At a time of terminating the sinusoidal wave control, the processor 110 may calculate phase voltages applied to the motor 60.

In operation S820, the home appliance 100 may calculate a d-axis voltage and a q-axis voltage of the motor based on the phase current to the motor. To calculate the phase voltage of the motor 60, the home appliance 100 may obtain the d-axis and q-axis voltages by converting the phase current to the motor 60.

The processor 110 may convert the three-phase currents (iu, iv, iw) to the motor 60 to a q-axis current (iq) and a d-axis current (id) through the axis converter 240. The processor 110 may detect a q-axis voltage (vq) and a d-axis voltage (vd) based on the q-axis current (iq) and the d-axis current (id). For example, the q-axis voltage ($v_q$) may be calculated by multiplying the q-axis current ($i_q$) by resistance ($r_s$) of the motor 60. For example, in the sinusoidal wave control, the d-axis indicates a direction of the magnetic field of the rotor of the motor 60, so the d-axis voltage ($v_d$) may be set to '0'.

Alternatively, the processor 110 may obtain the d-axis and q-axis voltages of the motor 60 by using Equation 6.

## [Equation 6]

$$0 = r_s i_d^e + L_d \frac{di_d^e}{dt} - \omega_e L_q i_q^e$$

$$v_q^e = r_s i_q^e + L_q \frac{di_q^e}{dt} + \omega_e L_d i_d^e + \omega_e \lambda_{PM}$$

Equation 6 represents a formula where 0 is put into $v_d^e$ in Equation 5. $i_q^e$ and $i_d^e$ may be the q-axis current and the d-axis current converted from the phase current to the motor 60 through the axis converter 240. The processor 110 may calculate $v_q^e$ corresponding to the q-axis voltage through Equation 6.

In operation S830, the home appliance 100 may set an initial duty ratio command to initiate square wave control based on the d-axis voltage and the q-axis voltage of the motor 60.

The processor 110 may calculate an initial duty ratio to initiate the square wave control by using Equation 7.

## [Equation 7]

$$ON\ duty = \frac{\sqrt{3} v_q^e}{V_{dc}}$$

In equation 7, $v_q^e$ may refer to the q-axis voltage of the motor 60, Vdc to DC power, and ON duty to the initial duty ratio.

The processor 110 may calculate the initial duty ratio by applying the q-axis voltage ($v_q^e$) and the DC power (Vdc) to Equation 7. The processor 110 may set the calculated initial duty ratio to the initial duty ratio command to initiate the square wave control. For example, the second speed controller 310 may set the calculated initial duty ratio to the initial duty ratio command ($v^{e*}$) (see FIG. 6).

In operation S840, the home appliance 100 may initiate the square wave control based on the initial duty ratio command. The time of initiating the square wave control may refer to a time right after switching to the square wave control from the sinusoidal wave control.

The home appliance 100 may switch to the square wave control from the sinusoidal wave control. The home appliance 100 may switch the control mode from the sinusoidal wave control to the square wave control based on the user's speed command or power command. For example, the home appliance 100 may switch to the square wave control from the sinusoidal wave control when the speed command is lower than threshold speed, but is not limited thereto. To switch the control mode from the sinusoidal wave control to the square wave control, the processor 110 may apply a disable signal to the sinusoidal wave controller 200 and an enable signal to the square wave controller 300 through the control selector 610, but is not limited thereto.

The processor 110 may drive the motor 60 in the square wave control mode based on the initial duty ratio command. For example, the processor 110 may initiate the square wave control based on the initial duty ratio command ($v^{e*}$). For example, the PWM generator 320 may generate an inverter control signal to control a switching device of the inverter 50 in a PWM signal form based on the initial duty ratio command ($v^{e*}$). The inverter 50 may control the motor 60 by using a driving current of a square waveform according to the square wave control. Phase voltages may be applied to the motor 60 based on the initial duty ratio command ($v^{e*}$).

In an embodiment of the present disclosure, phase voltages applied to the three phases of the motor 60 at the time of initiating the square wave control may correspond to phase voltages applied to the three phases of the motor 60 at the time of terminating the sinusoidal wave control. For example, the phase voltages applied to the motor 60 based on the initial duty ratio command may be equal to the phase voltages of the motor 60 calculated at the time of terminating the sinusoidal wave control. For example, the phase voltages applied to the motor 60 based on the initial duty ratio command may be equal to the phase voltages of the motor 60 calculated at the time of terminating the sinusoidal wave control. In the meantime, the phase voltage of the motor 60 may be calculated with the phase current to the motor 60 detected from the current sensor 70, but is not limited thereto. In the sinusoidal wave control, the phase voltage of the motor 60 may be calculated in various methods.

In an embodiment of the present disclosure, the home appliance 100 may calculate an initial duty ratio command at the time of initiating the square wave control based on the phase current to the motor 60 detected at the time of terminating the sinusoidal wave control. The home appliance 100 may prevent overcurrent issues caused when switching is performed from the sinusoidal wave control mode to the square wave control mode by switching to the square wave control mode after setting the initial duty ratio command to initiate the square wave control. In an embodiment of the present disclosure, the home appliance 100 may maintain the voltage in the open phase of the motor 60 before and after the control mode switching by switching to the square wave control mode after setting the initial duty ratio command. Accordingly, the home appliance 100 may switch the conduction mode at a desired time, and perform smooth switching to prevent a drastic change in phase current to the motor 60.

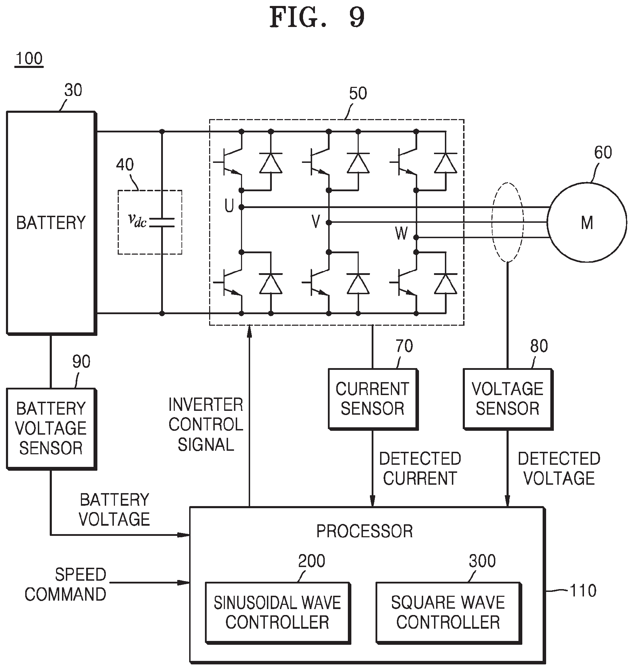

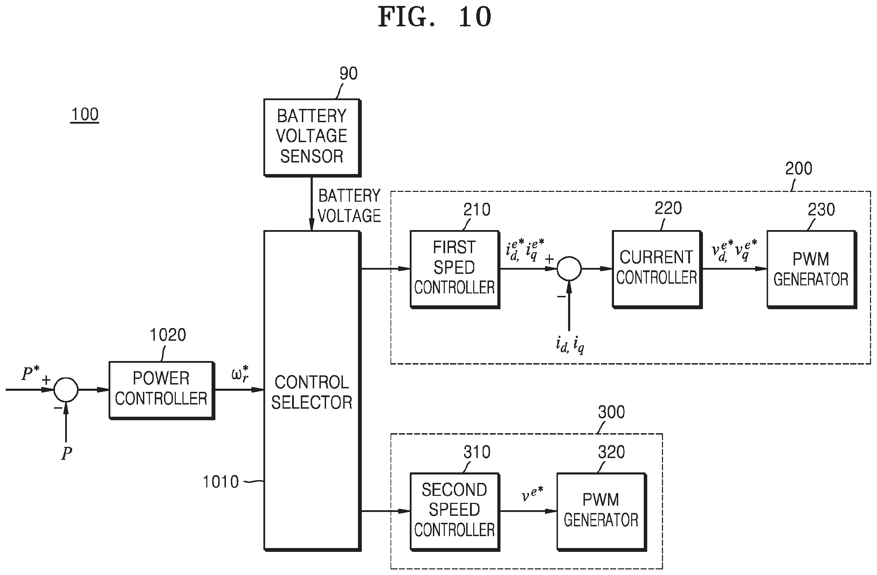

FIG. 9 illustrates an operation of a home appliance including a motor, according to an embodiment of the present disclosure. FIG. 10 is a block diagram for describing an operation of a home appliance for switching a conduction mode according to a speed command and a battery voltage, according to an embodiment of the present disclosure.

Referring to FIG. 9, in addition to the battery 30, the DC link capacitor 40, the inverter 50, the motor 60, the current sensor 70, the voltage sensor 80 and the processor 110, the home appliance 100 may further include a battery voltage sensor 90 for detecting a voltage of the battery 30.

The battery voltage sensor 90 may detect a DC voltage of the battery 30. The battery voltage sensor 90 may deliver the detected battery voltage to the processor 110.

Referring to FIG. 10, in an embodiment of the present disclosure, the home appliance 100 may switch the conduction mode to efficiently drive the motor 60 according to the speed command and the battery voltage.

In an embodiment of the present disclosure, the home appliance 100 may select a proper control mode from among the sinusoidal wave conduction mode or the square wave conduction mode based on the speed command and the battery voltage.

For example, the home appliance 100 may switch the conduction mode according to a speed command set by the user. For example, in a region where the home appliance 100 operates at low speed, the processor 110 may use the square wave conduction mode to minimize the switching loss. For example, the home appliance 100 may use the sinusoidal wave conduction mode to maximize efficiency of the motor 60 in a region where the home appliance 100 operates at high speed.

For example, the home appliance 100 may use the square wave conduction mode to reduce switching loss as the battery voltage decreases. For example, the home appliance 100 may use the sinusoidal wave conduction mode as the battery voltage of the home appliance 100 increases.

In an embodiment of the present disclosure, the home appliance 100 may switch the conduction mode according to a power command and the battery voltage.

The home appliance 100 may further include a power controller 1020. The power controller 1020 may receive the power command and current power, and calculate and output a speed command to reduce power errors. The power controller 1020 may further include a comparator to compare a power command ($P^*$) desired by the user with the current power ($P$). For example, the power controller 1020 may receive the power command ($P^*$) and the current power ($P$), and generate a speed command ($\omega^*_r$) by proportionally integrate the power error. The power controller 1020 may output the speed command ($\omega^*_r$) to a control selector 1010. In an embodiment, the power controller 1020 may be implemented with a processor separate from the processor 110. In this case, the power controller 1020 may be included in a main processor for controlling the general operation of the home appliance 100, but is not limited thereto. For example, the power controller 1020 may be integrated with the processor 110 as one processor.

In an embodiment, the power command ($P^*$) may be a value determined based on an operation mode of the home appliance 100. For example, when the home appliance 100 is a cleaner, operation modes of the cleaner may include low, medium, high, and jet modes. The power command may increase progressively from low to medium, high, and jet modes. Based on the power command, a speed command may be determined. For example, as the power command increases, the rotation command of the motor 60 may increase.

In an embodiment of the present disclosure, the home appliance 100 may switch the conduction mode when the operation mode is changed by the user. For example, when the operation mode is changed to the jet mode from the low mode, the home appliance 100 may switch the square wave conduction mode to the sinusoidal wave conduction mode. When the operation mode is changed to the jet mode from the low mode, the home appliance 100 may determine that the speed command is equal to or higher than threshold speed, and switch the square wave conduction mode to the sinusoidal wave conduction mode.

Furthermore, for example, when the operation mode is changed to the low mode from the jet mode, the home appliance 100 may switch the sinusoidal wave conduction mode to the square wave conduction mode. When the operation mode is changed to the low mode from the jet mode, the home appliance 100 may determine that the speed command is lower than threshold speed, and may switch the sinusoidal wave conduction mode to the square wave conduction mode.

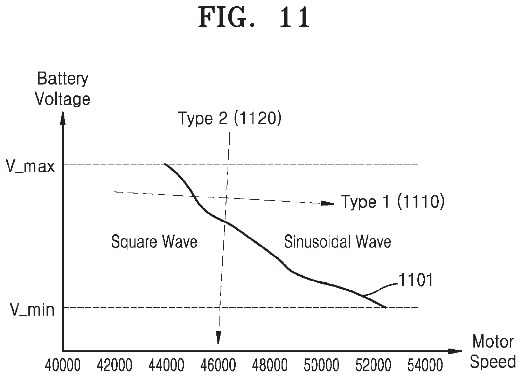

However, a basis of changing the operation mode for switching the conduction mode is not limited to the aforementioned example. For example, the conduction mode may be switched even in a situation where the operation mode is changed from the low mode to the high mode, which will be described in more detail in connection with FIG. 11.

In an embodiment of the present disclosure, the home appliance 100 may switch the conduction mode when there is a change in battery voltage. For example, when the battery voltage is equal to or higher than a threshold voltage, the home appliance 100 may switch the square wave conduction mode to the sinusoidal wave conduction mode. For example, when the battery voltage is lower than the threshold voltage, the home appliance 100 may switch the sinusoidal wave conduction mode to the square wave conduction mode.

In an embodiment of the present disclosure, the home appliance 100 may switch the conduction mode by taking into account both the speed command and the battery voltage. The processor 110 may include the control selector 1010 to select a control mode according to the speed command and the battery voltage. The control selector 1010 may select the sinusoidal wave controller 200 or the square wave controller 300 according to the speed command ($\omega_r{}^*$). Furthermore, the control selector 1010 may select the sinusoidal wave controller 200 or the square wave controller 300 according to the battery voltage. The control selector 1010 may provide an enable signal to a controller of the selected conduction mode and a disable signal to a controller of the non-selected conduction mode.

In an embodiment of the present disclosure, in case of switching the conduction mode based on the speed command and the battery voltage, the home appliance 100 may perform smooth switching to prevent a drastic change in phase current to the motor 60. This was described in connection with FIGS. 6 to 8, so the description thereof will not be repeated.

FIG. 11 is a graph for describing a time to switch a conduction mode according to a speed command and a battery voltage, according to an embodiment of the present disclosure.

Referring to FIG. 11, the home appliance 100 may determine a time to switch the conduction mode according to the operation mode and the battery voltage.

The home appliance 100 may determine a time to switch the conduction mode based on a baseline 1101 shown in the x-axis representing the rotation speed and the y-axis representing the battery voltage. For example, the home appliance 100 may use the sinusoidal wave conduction mode as the speed command increases with respect to the baseline 1101, and use the square wave conduction mode as the speed command decreases with respect to the baseline 1101. For example, the home appliance 100 may use the sinusoidal wave conduction mode as the battery voltage increases with respect to the baseline 1101, and use the square wave conduction mode as the battery voltage decreases with respect to the baseline 1101.

For example, in a first type 1110, the home appliance 100 may switch the conduction mode when the operation mode is changed by the user. For example, as the speed command of the motor 60 increases according to the operation mode, the home appliance 100 may switch the square wave conduction mode to the sinusoidal wave conduction mode. For example, as the speed command increases to more than about 44,000 rpm, the home appliance 100 may switch the square wave conduction mode to the sinusoidal wave conduction mode.

For example, in a second type 1120, the home appliance 100 may switch the conduction mode according to the battery voltage. For example, as the battery voltage decreases to below a full charge voltage (V_max), the home appliance 100 may switch the sinusoidal wave conduction mode to the square wave conduction mode.

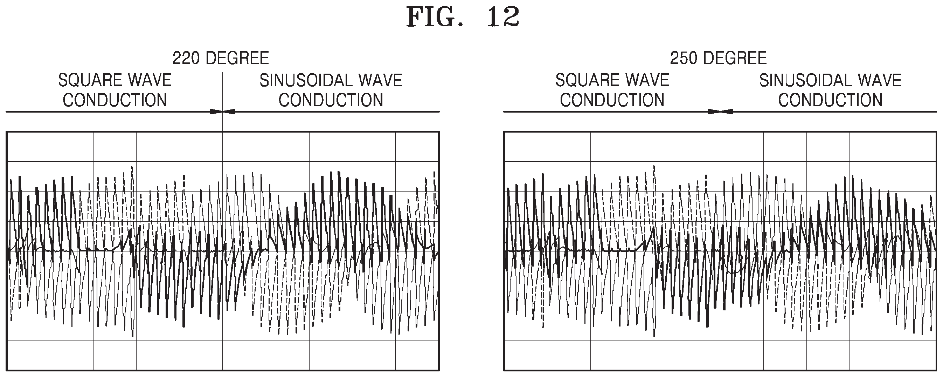

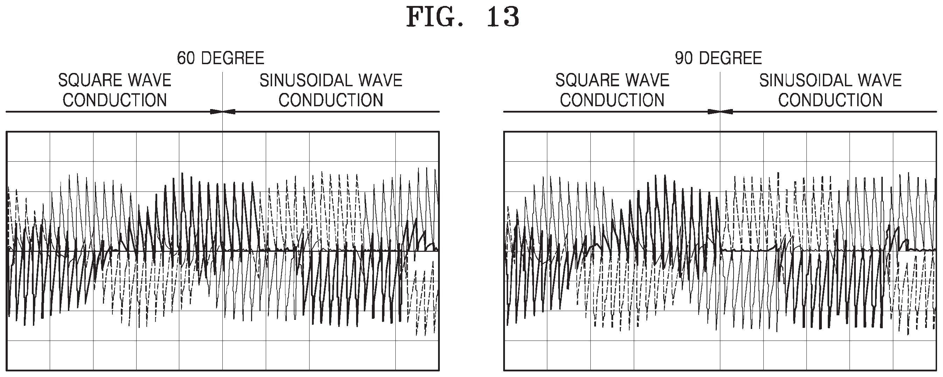

FIG. 12 is a graph of phase currents to the motor resulting from switching from a square conduction mode to a sinusoidal wave conduction mode, according to an embodiment of the present disclosure. FIG. 13 is a graph of phase currents to the motor resulting from switching from a sinusoidal wave conduction mode to a square wave conduction mode, according to an embodiment of the present disclosure.

Referring to FIG. 12, in an embodiment of the present disclosure, when the rotation angle is 220 degrees, the home appliance 100 may stably switch from the first conduction mode to the second conduction mode. Furthermore, when the rotation angle is 250 degrees, the home appliance 100 may stably switch from the first conduction mode to the second conduction mode. The first conduction mode may be the square wave conduction mode, and the second conduction mode may be the sinusoidal wave conduction mode.

Referring to FIG. 13, in an embodiment of the present disclosure, when the rotation angle is 60 degrees, the home appliance 100 may stably switch from the first conduction mode to the second conduction mode. Furthermore, when the rotation angle is 90 degrees, the home appliance 100 may stably switch from the first conduction mode to the second conduction mode. The first conduction mode may be the sinusoidal wave conduction mode, and the second conduction mode may be the square wave conduction mode.

Referring to FIGS. 12 and 13, the home appliance 100 may first set an initial command value of the second conduction mode before switching to the second conduction mode from the first conduction mode. Accordingly, the home appliance 100 may make the phase voltage of the motor 60 at a time of terminating the first conduction mode correspond to the phase voltage of the motor 60 at a time of initiating the second conduction mode.

Even without making the time at which the phase current passes the zero current according to the sinusoidal wave control correspond to the time at which the counter EMF passes a ZCP according to the square wave control while the rotation angle is changing from 0 to 360 degrees, the home appliance 100 may stably switch the conduction mode. For example, the home appliance 100 may stably switch the conduction mode even when the rotation angle is not 30, 90, 150, 210, 270 nor 330 degrees. Accordingly, the home appliance 100 may quickly switch the conduction mode at any time.

FIG. 14 is an example of a circuit diagram of a home appliance including a motor, according to an embodiment of the present disclosure.

In FIG. 14, the inverter 50 may include the plurality of switching devices Q1, Q2, Q3, Q4, Q5 and Q6, and a plurality of diodes. A switch device pair of the first switching device Q1 and the fourth switching device Q4 may be located to correspond to the U phase of the motor 60, a switch device pair of the third switching device Q3 and the sixth switching device Q6 to the V phase of the motor 60 and a switch device pair of the fifth switching device Q5 and the second switching device Q2 to the W phase of the motor 60.

The current sensor 70 may be located between an anode of the DC link capacitor 40 and the inverter 50. The current sensor 70 may be a shunt resistor.

The voltage sensor 80 may be located between the inverter 50 and the motor 60 to detect a driving voltage applied to the motor 60 from the inverter 50. The voltage sensor 80 is shown as detecting all the driving voltages of the three phases, but may detect a driving voltage of only 1-phase. The voltage sensor 80 may include resistors.

The battery voltage sensor 90 may be located between the DC link capacitor 40 and the inverter 50. The battery voltage sensor 90 may include resistors.

FIG. 15 is a detailed block diagram of a home appliance, according to an embodiment of the present disclosure.

Referring to FIG. 15, in an embodiment of the present disclosure, the home appliance 100 may correspond to a home appliance 1500. In an embodiment of the present disclosure, the home appliance 1500 includes a sensor 1510, an output interface 1520, an input interface 1530, a memory 1540, a communication module 1550, a home appliance function module 1560, a power module 1580 and a processor 1590. The home appliance 1500 may be configured with various combinations of the components shown in FIG. 19, but not all the components shown in FIG. 19 are essential.

The home appliance 1500 of FIG. 19 corresponds to the home appliance 100 as described in FIG. 1, and the processor 1590 corresponds to the processor 110 as described in FIG. 1.

The sensor 1510 may include various types of sensors, for example, a pressure gauge, a current sensor, an image sensor, an infrared sensor, an ultrasound sensor, a Lidar sensor, a human detection sensor, a motion detection sensor, a proximity sensor, an illumination sensor, etc. Those of ordinary skill in the art may intuitively infer the functions of the respective sensors from their names, so the detailed description thereof will be omitted.

The output interface 1520 may include a display 1521, a speaker 1522, etc. The output interface 1520 outputs various notifications, messages, information, etc., generated from the processor 1590.

The output interface 1530 may include keys 1531, a touch screen 1532, etc. The input interface 1530 receives a user input and forwards the user input to the processor 1590.

The memory 1540 stores various information, data, instructions, programs, etc., required for operation of the home appliance 1500. The memory 1540 may include at least one of a volatile memory or a non-volatile memory, or a combination thereof. The memory 1540 may include at least one type of storage medium including a flash memory, a hard disk, a multimedia card micro type memory, a card type memory (e.g., secure digital (SD) or extreme digital (XD) memory), a random access memory (RAM), a static RAM (SRAM), a read only memory (ROM), an electrically erasable programmable ROM (EEPROM), a programmable ROM (PROM), a magnetic memory, a magnetic disk, and an optical disk. Furthermore, the home appliance 1500 may operate a web storage or a cloud server that performs a storage function on the Internet.

The communication module 1550 may include at least one or a combination of a short-range communication module 1552 or a long-range communication module 1554. The communication module 1550 may include at least one antenna for wirelessly communicating with another device.

The short-range communication module 1552 may include a Bluetooth communication module, a Bluetooth low energy (BLE) communication module, a near field communication (NFC) module, a WLAN, e.g., Wi-Fi, communication module, a Zigbee communication module, an infrared data association (IrDA) communication module, a Wi-Fi direct (WFD) communication module, an ultrawideband (UWB) communication module, an Ant+ communication module, a microwave (uWave) communication module, etc., without being limited thereto.

The long-range communication module 1554 may include a communication module for performing various types of long-range communication and include a mobile communication module. The mobile communication module transmits and receives RF signals to and from at least one of a base station, an external terminal, or a server in a mobile communication network. The wireless signal may include a voice call signal, a video call signal or different types of data involved in transmission/reception of a text/multimedia message.

The home appliance function module 1560 includes an operation module that performs its original function. The home appliance function module 1560 may include a compressor 1961, the motor 60 and the inverter 50.

The power module 1580 is connected to a power source to supply power to the home appliance 1500.

The processor 1590 controls the general operation of the home appliance 1500. The processor 1590 may execute a program stored in the memory 1540 to control the components of the home appliance 1500.

The processor 1590 may be implemented with one or more processors. The processor 1590 may execute instructions or commands stored in the memory 1940 to perform a certain operation. Furthermore, the processor 1590 controls operations of the components included in the home appliance 1500. The processor 1590 may include at least one or a combination of a central processing unit (CPU), a graphic processing unit (GPU) or a video processing unit (NPU).

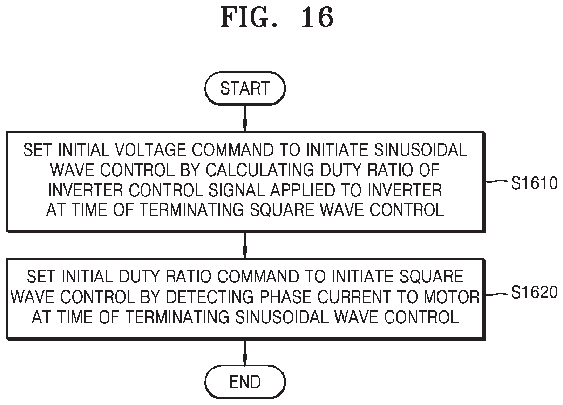

FIG. 16 is a flowchart illustrating an operation of a home appliance, according to an embodiment of the present disclosure.

Referring to FIG. 16, in operation S1610, the home appliance 100 may set an initial voltage command to initiate the sinusoidal wave control by calculating a duty ratio of an inverter control signal applied to the inverter 50 at a time of terminating the square wave control. The home appliance 100 may initiate the sinusoidal wave control based on the initial voltage command. For example, the phase voltage applied to the motor 60 at a time of initiating the sinusoidal wave control may be equal to the phase voltage applied to the motor 60 at a time of terminating the square wave control. Details of operation S1610 were described in connection with FIGS. 6 and 7.

In operation S1620, the home appliance 100 may set an initial duty ratio command to initiate the square wave control by detecting a phase current to the motor 60 at the time of terminating the sinusoidal wave control. The home appliance 100 may initiate the square wave control based on the initial duty ratio command. The phase voltage applied to the motor 60 at the time of initiating the square wave control may be equal to the phase voltage applied to the motor 60 at the time of terminating the sinusoidal wave control. Details of operation S1620 were described in connection with FIGS. 6 and 8.

According to an embodiment of the present disclosure, a method of controlling the home appliance 100 including the motor 60 includes calculating a duty ratio of an inverter control signal to change on/off states of a plurality of switches included in the inverter 50 at a time of terminating square wave control, calculating a phase voltage of the motor 60 based on the inverter control signal, and setting an initial voltage command to initiate sinusoidal wave control based on the phase voltage of the motor 60 and a position of a rotor of the motor 60. The method of controlling the home appliance 100 is characterized in that a phase voltage of the motor 60 based on the initial voltage command corresponds to the phase voltage of the motor 60 based on the duty ratio.

In an embodiment of the present disclosure, the calculating of the duty ratio of the inverter control signal may include detecting a driving voltage of the motor 60 through the voltage sensor 80, detecting rotation speed of the motor 60 based on the driving voltage of the motor 60, and calculating a duty ratio to reduce a speed error between a speed command and the rotation speed of the motor 60.

In an embodiment of the present disclosure, the calculating of the phase voltage of the motor 60 may include detecting a driving voltage of the motor 60 through the voltage sensor 80, detecting a position of the rotor of the motor 60 based on the driving voltage of the motor 60, and calculating a phase voltage of the motor 60 output from the inverter 50 turned on or off according to a switching sequence based on the position of the rotor of the motor 60 and the duty ratio.

In an embodiment of the present disclosure, the calculating of the phase voltage of the motor 60 is characterized by using equations below,

$$(1) \quad V_{PWM} = V_{dc} * (ON \ duty - 0.5)$$

$$(2) \quad V_{Low \ ON} = -0.5 * V_{dc}$$

$$(3) \quad V_{Open} = V_{dc} * (ON \ duty - 0.5) + \omega_r * \lambda_{PM} * \sin(\theta_r + \frac{2}{3}\pi)$$

where $V_{PWM}$ may refer to a voltage of the first phase connected to a switch receiving the inverter control signal in a PWM form, $V_{dc}$ to DC power, ON duty to a duty ratio, $V_{LOW \ ON}$ to a voltage of a second phase connected to a switch receiving an ON signal, $V_{Open}$ to a voltage of a third phase connected to an open switch, $\omega_r$ to rotation speed of the motor 60, $\lambda_{PM}$ to a counter EMF constant, and $\theta_r$ to a position of the rotor of the motor 60.

In an embodiment of the present disclosure, the method of controlling the home appliance 100 including the motor 60 may further include calculating an initial current command based on the initial voltage command, and initiating sinusoidal wave control based on the initial voltage command and the initial current command.

In an embodiment of the present disclosure, the method of controlling the home appliance 100 including the motor 60 further includes detecting a phase current to the motor 60 through the current sensor 70 at a time of terminating the sinusoidal wave control, calculating a d-axis voltage and q-axis voltage of the motor 60 based on the phase current to the motor (60), and setting an initial duty ratio command to initiate square wave control based on the d-axis voltage and q-axis voltage of the motor 60. The phase voltage of the motor based on the initial duty ratio command is characterized to correspond to a phase voltage of the motor 60 based on the sinusoidal wave control.

In an embodiment of the present disclosure, the calculating of the d-axis voltage and the q-axis voltage of the motor 60 is characterized by using equations below,

$$0 = r_s i_d^e + L_d \frac{di_d^e}{dt} - \omega_e L_q i_q^e$$

$$v_q^e = r_s i_q^e + L_q \frac{di_q^e}{dt} + \omega_e L_d i_d^e + \omega_e \lambda_{PM}$$

wherein $v_d^e$ may refer to the d-axis voltage, $v_q^e$ to the q-axis voltage, $i_d^e$ to a d-axis current, $i_q^e$ to a q-axis current, $L_d$ to d-axis inductance, $L_q$ to q-axis inductance, $r_s$ to resistance of a coil of the motor 60, and $\omega e$ to an angular speed of the motor 60.

In an embodiment of the present disclosure, the setting of the initial duty ratio command for controlling square wave control is characterized by using an equation below,

$$ON\ duty = \frac{\sqrt{3}\, v_q^e}{V_{dc}}$$

where $v_q^e$ may refer to the q-axis voltage of the motor 60, Vdc to DC power, and ON duty to the initial duty ratio command.

In an embodiment of the present disclosure, the method of controlling the home appliance 100 including the motor 60 may include setting an initial voltage command to initiate sinusoidal wave control by calculating a duty ratio of an inverter control signal to be applied to the inverter 50 at a time of terminating square wave control, and setting an initial duty ratio command to initiate square wave control by detecting a phase current to the motor 60 at the time of terminating the sinusoidal wave control. The phase voltage applied to the motor 60 at a time of initiating the sinusoidal wave control is characterized to be equal to a phase voltage applied to the motor 60 at the time of terminating the square wave control. The phase voltage applied to the motor 60 at the time of initiating the square wave control is characterized to be equal to the phase voltage applied to the motor 60 at the time of terminating the sinusoidal wave control.

In an embodiment of the present disclosure, the method of controlling the home appliance 100 including the motor 60 may include switching the square wave control to the sinusoidal wave control based on the speed command being equal to or higher than threshold speed, and switching the sinusoidal wave control to the square wave control based on the speed command being lower than the threshold speed.

In an embodiment of the present disclosure, the method of controlling the home appliance 100 including the motor 60 may include switching the sinusoidal wave control to the square wave control based on the battery voltage being lower than a threshold voltage.

In an embodiment of the present disclosure, the setting of the initial voltage command to initiate sinusoidal wave control by calculating a duty ratio of an inverter control signal to be applied to the inverter 50 may include calculating a duty ratio of an inverter control signal to change on/off states of a plurality of switches included in the inverter 50 at a time of terminating the square wave control, calculating a phase voltage of the motor 60 based on the inverter control signal, and setting an initial voltage command to initiate sinusoidal wave control based on the phase voltage of the motor 60 and a position of a rotor of the motor 60.

In an embodiment of the present disclosure, the setting of the initial duty ratio command to initiate the square wave control by detecting a phase current to the motor 60 at the time of terminating the sinusoidal wave control may include detecting a phase current to the motor 60 through the current sensor 70 at a time of terminating the sinusoidal wave control, calculating a d-axis voltage and q-axis voltage of the motor 60 based on the phase current to the motor (60), and setting an initial duty ratio command to initiate square wave control based on the d-axis voltage and q-axis voltage of the motor 60.

According to an embodiment of the present disclosure, the home appliance 100 includes the motor 60, the inverter 50 for generating an AC current from DC power and outputting an AC driving current to the motor 60, the current sensor 70 for detecting a phase current to the motor 60, the voltage sensor 80 for detecting a phase voltage of the motor 60, the memory 1940 for storing at least one instruction, and at least one processor 110. The at least one processor 110 is configured to execute the at least one instruction to calculate a duty ratio of an inverter control signal to change on/off states of a plurality of switches included in the inverter 50 at a time of terminating the square wave control. The at least one processor 110 is configured to calculate a phase voltage of the motor 60 based on the inverter control signal. The at least one processor 110 is configured to set an initial voltage command to initiate sinusoidal wave control based on the phase voltage of the motor 60 and a position of a rotor of the motor 60. The at least one processor 110 is characterized to make a phase voltage of the motor 60 based on the initial voltage command correspond to the phase voltage of the motor 60 based on the duty ratio.

In an embodiment of the present disclosure, the at least one processor 110 may be configured to execute the at least one instruction to detect a driving voltage of the motor 60 through the voltage sensor 80. The at least one processor 110 may be configured to detect rotation speed of the motor 60 based on the driving voltage of the motor 60. The at least one processor 110 may be configured to calculate a duty ratio to reduce a speed error between the speed command and the rotation speed of the motor 60.

In an embodiment of the present disclosure, the at least one processor 110 may be configured to execute the at least one instruction to detect a driving voltage of the motor 60 through the voltage sensor 80. The at least one processor 110 may be configured to detect a position of the rotor of the motor 60 based on the driving voltage of the motor 60. The at least one processor 110 may be configured to calculate a phase voltage of the motor 60 output from the inverter 50 turned on or off according to a switching sequence based on the position of the rotor of the motor 60 and the duty ratio.

In an embodiment of the present disclosure, the at least one processor 110 may be configured to execute the at least one instruction to detect phase voltages of the motor 60 by using equations below:

$$(1) \quad V_{PWM} = V_{dc} * (ON \; duty - 0.5)$$

$$(2) \quad V_{Low \; ON} = -0.5 * V_{dc}$$

$$(3) \quad V_{Open} = V_{dc} * (ON \; duty - 0.5) + \omega_r * \lambda_{PM} * \sin\left(\theta_r + \frac{2}{3}\pi\right)$$

where $V_{PWM}$ may refer to a voltage of the first phase connected to a switch receiving an inverter control signal in a PWM form, $V_{dc}$ to DC power, ON duty to a duty ratio, $V_{LOW \; ON}$ to a voltage of a second phase connected to a switch receiving an ON signal, $V_{Open}$ to a voltage of a third phase connected to an open switch, $\omega_r$ to rotation speed of the motor 60, $\lambda_{PM}$ to a counter EMF constant, and $\theta_r$ to a position of the rotor of the motor 60.

In an embodiment of the present disclosure, the at least one processor 110 may be configured to execute the at least one instruction to calculate an initial current command based on the initial voltage command. The at least one processor 110 may be configured to initiate sinusoidal wave control based on the initial voltage command and the initial current command.

**In** an embodiment of the present disclosure, the at least one processor 110 may be configured to execute the at least one instruction to detect a phase current to the motor 60 through the current sensor 70 at a time of terminating the sinusoidal wave control. The at least one processor 110 may be configured to calculate a d-axis voltage and a q-axis voltage of the motor 60 based on the phase current to the motor 60. The at least one processor 110 may be configured to set an initial duty ratio command to initiate square wave control based on the d-axis voltage and the q-axis voltage of the motor 60.

**In** an embodiment of the present disclosure, the at least one processor 110 may be configured to execute the at least one instruction to set the initial duty ratio command for square wave control by using an equation below:

$$ON \; duty = \frac{\sqrt{3} \, v_q^e}{V_{dc}}$$

where $v_q^e$ may refer to the q-axis voltage of the motor 60, Vdc to DC power, and ON duty to the initial duty ratio command.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a compact disc read only memory (CD-ROM)) or distributed directly between two user devices (e.g., smart phones) or online (e.g., downloaded or uploaded) through an application store. In the case of the online distribution, at least part of the computer program product (e.g., a downloadable app) may be at least temporarily stored or arbitrarily created in a storage medium that may be readable to a device such as a server of the manufacturer, a server of the application store, or a relay server.

**Claims**

1. A method of controlling a home appliance (100) including a motor (60), the method comprising:

   calculating a duty ratio of an inverter control signal to change on/off states of a plurality of switches included in an inverter (50) at a time of terminating square wave control;
   calculating a phase voltage of the motor (60) based on the inverter control signal; and
   setting an initial voltage command to initiate sinusoidal wave control based on the phase voltage of the motor (60) and a position of a rotor of the motor (60),
   wherein a phase voltage of the motor (60) based on the initial voltage command is characterized to correspond to a phase voltage of the motor (60) based on the duty ratio.

2. The method of claim 1, wherein the calculating of the duty ratio of the

   inverter control signal comprises
   detecting a driving voltage of the motor (60) through a voltage sensor (80); detecting a rotation speed of the motor (60) based on the driving voltage of the motor (60); and
   calculating the duty ratio to reduce a speed error between a speed command and the rotation speed of the motor (60).

3. The method of claim 1 or 2, wherein the calculating of the phase voltage

   of the motor (60) comprises
   detecting a driving voltage of the motor (60) through a voltage sensor (80); detecting the position of the rotor of the motor (60) based on the driving voltage of the motor (60); and
   calculating the phase voltage of the motor (60) output from the inverter (50) turned on or off according to a switching sequence based on the position of the rotor of the motor (60) and the duty ratio.

4. The method of any one of claims 1 to 3, wherein the calculating of the

   phase voltage of the motor (60) is characterized to use equations below:

$$(1) \quad V_{PWM} = V_{dc} * (ON\ duty - 0.5)$$

$$(2) \quad V_{Low\ ON} = -0.5 * V_{dc}$$

$$(3) \quad V_{Open} = V_{dc} * (ON\ duty - 0.5) + \omega_r * \lambda_{PM} * \sin\left(\theta_r + \frac{2}{3}\pi\right)$$

   wherein $V_{PWM}$ refers to a voltage of a first phase connected to a switch receiving an inverter control signal in a PWM form, $V_{dc}$ refers to direct current (DC) power, ON duty refers to the duty ratio, $V_{LOW\ ON}$ refers to a voltage of a second phase connected to a switch receiving an ON signal, $V_{Open}$ refers to a voltage of a third phase connected to an open switch, $\omega_r$ refers to rotation speed of the motor 60, $\lambda_{PM}$ refers to a counter electromotive force (EMF) constant, and $\theta_r$ refers to a position of the rotor of the motor (60).

5. The method of any one of claims 1 to 4, further comprising:

   calculating an initial current command based on the initial voltage command; and
   initiating the sinusoidal wave control based on the initial voltage command and the initial current command.

6. The method of any one of claims 1 to 5, further comprising:

   detecting a phase current to the motor (60) through a current sensor (70) at a time of terminating sinusoidal wave control;

calculating a d-axis voltage and a q-axis voltage of the motor (60) based on the phase current to the motor (60); and

setting an initial duty ratio command to initiate square wave control based on the d-axis voltage and q-axis voltage of the motor (60),

wherein a phase voltage of the motor (60) based on the initial duty ratio command is characterized to correspond to a phase voltage of the motor (60) based on the sinusoidal wave control.

7. The method of claim 6, wherein the calculating of the d-axis voltage and

q-axis voltage of the motor (60) is characterized to use equations below:

$$0 = r_s i_d^e + L_d \frac{di_d^e}{dt} - \omega_e L_q i_q^e$$

$$v_q^e = r_s i_q^e + L_q \frac{di_q^e}{dt} + \omega_e L_d i_d^e + \omega_e \lambda_{PM}$$

wherein $v_d^e$ refers to the d-axis voltage, $v_q^e$ refers to the q-axis voltage, $i_d^e$ refers to a d-axis current, $i_q^e$ refers to a q-axis current, $L_d$ refers to d-axis inductance, $L_q$ refers to q-axis inductance, $r_s$ refers to resistance of a coil of the motor 60, and $\omega e$ refers to an angular speed of the motor (60).

8. The method of claim 6 or 7, wherein the setting of the initial duty ratio

command for the square wave control is characterized to use an equation below:

$$ON\ duty = \frac{\sqrt{3} v_q^e}{V_{dc}}$$

wherein $v_q^e$ refers to the q-axis voltage of the motor (60), Vdc to DC power, and ON duty refers to the initial duty ratio command.

9. A method of controlling a home appliance (100) including a motor (60), the method comprising:

setting an initial voltage command to initiate sinusoidal wave control by calculating a duty ratio of an inverter control signal to be applied to an inverter (50) at a time of terminating square wave control; and

setting an initial duty ratio command to initiate the square wave control by detecting a phase current to the motor (60) at a time of terminating the sinusoidal wave control,

wherein a phase voltage applied to the motor (60) at a time of initiating the sinusoidal wave control is characterized to be equal to a phase voltage applied to the motor (60) at a time of terminating the square wave control, and

wherein a phase voltage applied to the motor (60) at a time of initiating the square wave control is characterized to be equal to a phase voltage applied to the motor (60) at a time of terminating the sinusoidal wave control.

10. The method of claim 9, further comprising:

switching the square wave control to the sinusoidal wave control based on the speed command being equal to or higher than a threshold speed; and

switching the sinusoidal wave control to the square wave control based on the speed command being lower than the threshold speed.

11. The method of claim 9 or 10, further comprising:
switching the sinusoidal wave control to the square wave control based on the battery voltage being lower than a threshold voltage.

12. The method of any one of claims 9 to 11, wherein the setting of the initial

voltage command to initiate sinusoidal wave control by calculating the duty ratio of the inverter control signal to be applied to the inverter (50) comprises

calculating a duty ratio of an inverter control signal to change on/off states of a plurality of switches included in the inverter (50) at a time of terminating the square wave control;

calculating a phase voltage of the motor (60) based on the inverter control signal; and

setting an initial voltage command to initiate sinusoidal wave control based on the phase voltage of the motor (60) and a position of a rotor of the motor (60).

13. The method of any one of claims 9 to 12, wherein the setting of the initial

duty ratio command to initiate the square wave control by detecting the phase current to the motor (60) at the time of terminating the sinusoidal wave control comprises

detecting a phase current to the motor (60) through a current sensor (70) at a time of terminating the sinusoidal wave control;

calculating a d-axis voltage and a q-axis voltage of the motor (60) based on the phase current to the motor (60); and

setting an initial duty ratio command to initiate square wave control based on the d-axis voltage and q-axis voltage of the motor (60).

14. A home appliance (100) comprising:

a motor (60);

an inverter (50) generating an alternate current (AC) current from direct current (DC) power and outputting an AC driving current to the motor (60);

a current sensor (70) detecting a phase current to the motor (60);

a voltage sensor (80) detecting a phase voltage of the motor (60);

memory (1940) storing at least one instruction; and

at least one processor (110),

wherein the at least one processor (110) is configured to execute the at least one instruction to

calculate a duty ratio of an inverter control signal to change on/off states of a plurality of switches included in the inverter (50) at a time of terminating square wave control,

calculate a phase voltage of the motor (60) based on the inverter control signal, and

set an initial voltage command to initiate sinusoidal wave control based on the phase voltage of the motor (60) and a position of a rotor of the motor (60), and

wherein a phase voltage of the motor (60) based on the initial voltage command is characterized to correspond to a phase voltage of the motor (60) based on the duty ratio.

15. The home appliance (100) of claim 14, wherein the at least one processor (110) is configured to execute the at least one instruction to

detect a driving voltage of the motor (60) through the voltage sensor (80); detect a rotation speed of the motor (60) based on the driving voltage of the motor (60), and

calculate the duty ratio to reduce a speed error between a speed command and the rotation speed of the motor (60).

# FIG. 1

# FIG. 2

## FIG. 3

# FIG. 4

# FIG. 5

## FIG. 6

# FIG. 7

```
START
```

CALCULATE DUTY RATIO OF INVERTER CONTROL SIGNAL TO
CHANGE ON/OFF STATE OF MULTIPLE SWITCHES INCLUDED IN
INVERTER AT TIME OF TERMINATING SQUARE WAVE CONTROL
— S710

CALCULATE PHASE VOLTAGE OF MOTOR
BASED ON INVERTER CONTROL SIGNAL
— S720

SET INITIAL VOLTAGE COMMAND TO INITIATE SINUSOIDAL
WAVE CONTROL BY PERFORMING COORDINATE
TRANSFORMATION ON PHASE VOLTAGE OF MOTOR
— S730

INITIATE SINUSOIDAL WAVE CONTROL
BASED ON INITIAL VOLTAGE COMMAND
— S740

```
END
```

# FIG. 8

START

DETECT PHASE CURRENT TO MOTOR THROUGH CURRENT
SENSOR AT TIME OF TERMINATING SINUSOIDAL WAVE CONTROL — S810

CALCULATE D-AXIS AND Q-AXIS VOLTAGES OF
MOTOR BASED ON PHASE CURRENT TO MOTOR — S820

SET INITIAL DUTY RATIO COMMAND TO INITIATE SQUARE WAVE
CONTROL BASED ON D-AXIS AND Q-AXIS VOLTAGES OF MOTOR — S830

INITIATE SQUARE WAVE CONTROL
BASED ON INITIAL DUTY RATIO COMMAND — S840

END

**EP 4 769 931 A1**

# FIG. 9

## FIG. 10

EP 4 769 931 A1

# FIG. 11

# FIG. 12

**250 DEGREE**

SQUARE WAVE CONDUCTION | SINUSOIDAL WAVE CONDUCTION

**220 DEGREE**

SQUARE WAVE CONDUCTION | SINUSOIDAL WAVE CONDUCTION

FIG. 13

**FIG. 14**

# FIG. 15

1500

# FIG. 16

```
START
```

SET INITIAL VOLTAGE COMMAND TO INITIATE SINUSOIDAL
WAVE CONTROL BY CALCULATING DUTY RATIO OF
INVERTER CONTROL SIGNAL APPLIED TO INVERTER
AT TIME OF TERMINATING SQUARE WAVE CONTROL — S1610

SET INITIAL DUTY RATIO COMMAND TO INITIATE SQUARE
WAVE CONTROL BY DETECTING PHASE CURRENT TO MOTOR — S1620
AT TIME OF TERMINATING SINUSOIDAL WAVE CONTROL

```
END
```

## INTERNATIONAL SEARCH REPORT

| International application No. |
|---|
| **PCT/KR2024/010486** |

### A. CLASSIFICATION OF SUBJECT MATTER

**H02P 6/08**(2006.01)i; **H02P 6/06**(2006.01)i; **H02P 6/14**(2006.01)i; **H02P 21/14**(2006.01)i; **H02P 27/06**(2006.01)i

According to International Patent Classification (IPC) or to both national classification and IPC

### B. FIELDS SEARCHED

Minimum documentation searched (classification system followed by classification symbols)

H02P 6/08(2006.01); F24F 11/00(2006.01); H02P 21/05(2006.01); H02P 27/08(2006.01); H02P 6/00(2006.01); H02P 6/17(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 구형파(square wave), 사인파(sinusoidal wave), 제어(control), 듀티비(duty ratio), 상전압(phase voltage)

### C. DOCUMENTS CONSIDERED TO BE RELEVANT

| Category* | Citation of document, with indication, where appropriate, of the relevant passages | Relevant to claim No. |
|---|---|---|
| X | JP 2019-088050 A (SAWAFUJI ELECTRIC CO., LTD.) 06 June 2019 (2019-06-06)<br>See paragraphs [0002] and [0007]-[0081] and figures 1-6. | 1,9,14 |
| Y | | 10 |
| A | | 2-3,11,15 |
| Y | JP 2012-178905 A (NAKANISHI K.K.) 13 September 2012 (2012-09-13)<br>See paragraphs [0010]-[0032] and figures 1-9. | 10 |
| A | KR 10-2019-0121264 A (JOHNSON ELECTRIC INTERNATIONAL AG) 25 October 2019 (2019-10-25)<br>See claims 1-11 and figures 1-3. | 1-3,9-11,14-15 |
| A | JP 11-285288 A (TOYOTA MOTOR CORP.) 15 October 1999 (1999-10-15)<br>See paragraphs [0021]-[0054] and figures 4-9. | 1-3,9-11,14-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 October 2024** | **31 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/010486** |

### C. DOCUMENTS CONSIDERED TO BE RELEVANT

| Category* | Citation of document, with indication, where appropriate, of the relevant passages | Relevant to claim No. |
| --- | --- | --- |
| A | US 2015-0349677 A1 (DYNA RECHI CO., LTD.) 03 December 2015 (2015-12-03) See claims 1-14 and figures 1-5. | 1-3,9-11,14-15 |

Form PCT/ISA/210 (second sheet) (July 2022)

**INTERNATIONAL SEARCH REPORT**

| International application No. |
| --- |
| **PCT/KR2024/010486** |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **7**
because they relate to parts of the international application that do not comply with the prescribed requirements to such an extent that no meaningful international search can be carried out, specifically:

Claim 7 refers to a claim violating PCT Rule 6.4(a), and thus is considered to be an unclear claim.

3. ☑ Claims Nos.: **4-6,8,12-13**
because they are dependent claims and are not drafted in accordance with the second and third sentences of Rule 6.4(a).

Form PCT/ISA/210 (continuation of first sheet) (July 2022)

| Patent document cited in search report | | | Publication date (day/month/year) | Patent family member(s) | | | Publication date (day/month/year) |
|---|---|---|---|---|---|---|---|
| JP | 2019-088050 | A | 06 June 2019 | CN | 110800206 | A | 14 February 2020 |
| | | | | DE | 112018005734 | T5 | 23 July 2020 |
| | | | | JP | 6951945 | B2 | 20 October 2021 |
| | | | | WO | 2019-087644 | A1 | 09 May 2019 |
| JP | 2012-178905 | A | 13 September 2012 | JP | 6057497 | B2 | 11 January 2017 |
| KR | 10-2019-0121264 | A | 25 October 2019 | CN | 110391770 | A | 29 October 2019 |
| | | | | EP | 3557754 | A1 | 23 October 2019 |
| | | | | JP | 2019-195256 | A | 07 November 2019 |
| | | | | US | 2019-0319560 | A1 | 17 October 2019 |
| JP | 11-285288 | A | 15 October 1999 | JP | 3633270 | B2 | 30 March 2005 |
| US | 2015-0349677 | A1 | 03 December 2015 | | None | | |

Form PCT/ISA/210 (patent family annex) (July 2022)